# EUROPEAN PATENT SPECIFICATION

(11) **EP 3 819 968 B1**
(45) Date of publication and mention of the grant of the patent: **28.01.2026**
(21) Application number: 20205645.3
(22) Date of filing: 04.11.2020
(51) Int. Cl.: H01M 4/525, H01M 4/36

(54) **POSITIVE ELECTRODE ACTIVE MATERIAL COMPOSITE PARTICLE AND POWDER**
POSITIVELEKTRODENAKTIVMATERIALVERBUNDSTOFFPARTIKEL UND -PULVER
PARTICULE COMPOSITE DE MATÉRIAU ACTIF D'ÉLECTRODE POSITIVE ET POUDRE

(30) Priority: 05.11.2019 JP 2019201089
(43) Date of publication of application: 12.05.2021
(73) Proprietor: Seiko Epson Corporation, Tokyo 160-8801 (JP)
(72) Inventor: YOKOYAMA, Tomofumi, Suwa-shi, Nagano 392-8502 (JP); TERAOKA, Tsutomu, Suwa-shi, Nagano 392-8502 (JP); YAMAMOTO, Hitoshi, Suwa-shi, Nagano 392-8502 (JP); FURUSAWA, Masahiro, Suwa-shi, Nagano 392-8502 (JP); TOYODA, Naoyuki, Suwa-shi, Nagano 392-8502 (JP)
(74) Representative: Lewis Silkin LLP

(56) References cited:
- US-A1- 2017 222 211
- US-A1- 2018 254 525
- US-A1- 2018 316 009

## Description

### BACKGROUND

### 1. Technical Field

The present disclosure relates to a positive electrode active material composite particle and a powder.

### 2. Related Art

A lithium-ion secondary battery has increased its importance as a high-energy power supply in a wide range of industries, and in particular, an all solid-state battery in which an electrolyte has been replaced with a solid electrolyte has attracted attention as a technique for realizing safety and rapid charging and discharging.

In an all solid-state battery, the internal resistance is likely to be high due to its material or structural characteristics, and many of them do not sufficiently operate at a temperature near room temperature, for example, at 10°C or higher and 35°C or lower. However, recently, charge characteristics comparable to those of a lithium-ion secondary battery in the related art even at a temperature near room temperature have been required, and a drastic decrease in charge-discharge capacity caused by the internal resistance in the operation at a temperature near room temperature has become a problem.

Therefore, an attempt to decrease an electrical resistance of a portion constituted by a material containing an active material that is a constituent member of an all solid-state battery, or a so-called internal resistance such as an ion conduction resistance of a portion constituted by a material containing a solid electrolyte has been conducted. In particular, it has been revealed that a portion of a positive electrode composite material containing a positive electrode active material and a solid electrolyte accounts for a large proportion of the internal resistance of an all solid-state battery.

However, an interface formation technique capable of decreasing a charge transfer resistance between a solid electrolyte and a positive electrode active material at a temperature near room temperature is lacking, and therefore, it was difficult to decrease the internal resistance of the positive electrode composite material, and the charge-discharge characteristics of an all solid-state battery at a temperature near room temperature did not reach the level of a lithium-ion secondary battery in the related art.

Therefore, in order to decrease the internal resistance of the positive electrode composite material without resort to the interface formation technique, a method of decreasing the resistance value by molding the positive electrode composite material thin, a method of adopting a carbon nanotube as an electric conduction assistant, a method of increasing the electron conduction property of the positive electrode active material itself by partially substituting oxygen constituting the positive electrode active material with nitrogen, and the like have been attempted.

However, in a process of charge transfer occurring when lithium ions travel between the positive electrode active material and the solid electrolyte, when the interface formation is insufficient, lithium ions are lacking in the vicinity of the interface, and the charge transfer reaction no longer proceeds, and therefore, even if the internal resistance is decreased by an electrical design method, there was a limit on the formation of an all solid-state battery that can withstand practical use.

Therefore, recently, an attempt to decrease the charge transfer resistance and also to avoid lack of ions during high-rate charging and discharging by disposing a material that affects the electrical state of an interface where charge transfer between the positive electrode active material and the solid electrolyte occurs has attracted attention.

For example, JP-A-2003-59492 (Patent Document 1) discloses a technique for coating active material particles with a layer composed of lithium ion conductive inorganic solid electrolyte particles and electric conductive agent particles that are mutually bound to each other for improving the adhesion between a solid electrolyte and an active material.

Further, in JP-A-2014-93260 (Patent Document 2), an attempt to mix a material having a low melting point such as SiO₂ or an amorphous material and sinter the resulting mixture at a high temperature is performed for rigidly coupling an ion conductor to a positive electrode active material.

However, according to the configuration described in Patent Document 1, an infinite number of voids are likely to be generated in the solid electrolyte, and also point contact is likely to occur at the interface, and therefore, lack of lithium ions in the vicinity of the interface easily occurs, and it was not a technique capable of realizing an all solid-state battery that sufficiently operates at a temperature near room temperature.

Further, according to the configuration described in Patent Document 2, a medium having a lithium ion concentration different from the ion conductor is mixed, and a capacitor resistance is formed at the interface between both members during charging and discharging, and therefore, there was a problem that the net internal resistance of the positive electrode composite material is increased instead.

US 2018/316009 discloses a composite cathode active material that includes a core including a first lithium transition metal oxide represented by LiₐMO₂, wherein M includes Ni and at least one non-nickel Group 4 to Group 13 element, wherein a content of Ni is about 70 mole percent or greater, based on a total content of M, 0.9≤a≤1.1, and wherein the first lithium transition metal oxide has a layered crystal structure belonging to an R³m space group. The material also includes a shell on a surface of the core, the shell having a spinel crystal structure and including a dopant.

US 2018/254525 and US 2017/222211 are also relevant.

### SUMMARY

A positive electrode active material composite particle according to the invention is defined in claim 1.

A powder according to another aspect of the invention includes a plurality of the positive electrode active material composite particles described above.

### BRIEF DESCRIPTION OF THE DRAWINGS

FIG. 1 is a cross-sectional view schematically showing positive electrode active material composite particles according to the present disclosure.
FIG. 2 is a schematic perspective view schematically showing a configuration of a lithium-ion secondary battery of a first embodiment.
FIG. 3 is a schematic cross-sectional view schematically showing a structure of the lithium-ion secondary battery of the first embodiment.
FIG. 4 is a schematic perspective view schematically showing a configuration of a lithium-ion secondary battery of a second embodiment.
FIG. 5 is a schematic cross-sectional view schematically showing a structure of the lithium-ion secondary battery of the second embodiment.
FIG. 6 is a flowchart showing a production method for a lithium-ion secondary battery of the first embodiment.
FIG. 7 is a schematic view schematically showing the production method for a lithium-ion secondary battery of the first embodiment.
FIG. 8 is a schematic view schematically showing the production method for a lithium-ion secondary battery of the first embodiment.
FIG. 9 is a schematic cross-sectional view schematically showing another method for forming a positive electrode composite material.
FIG. 10 is a flowchart showing a production method for a lithium-ion secondary battery of the second embodiment.
FIG. 11 is a schematic view schematically showing the production method for a lithium-ion secondary battery of the second embodiment.
FIG. 12 is a schematic view schematically showing the production method for a lithium-ion secondary battery of the second embodiment.
FIG. 13 is a schematic view schematically showing the production method for a lithium-ion secondary battery of the second embodiment.
FIG. 14 is a transmission electron micrograph of a fired body according to Example 1.
FIG. 15 is a transmission electron micrograph of a fired body according to Comparative Example 3.

### DESCRIPTION OF EXEMPLARY EMBODIMENTS

Hereinafter, preferred embodiments of the present disclosure will be described in detail.

### [1] Positive Electrode Active Material Composite Particle

First, a positive electrode active material composite particle according to the present disclosure will be described.

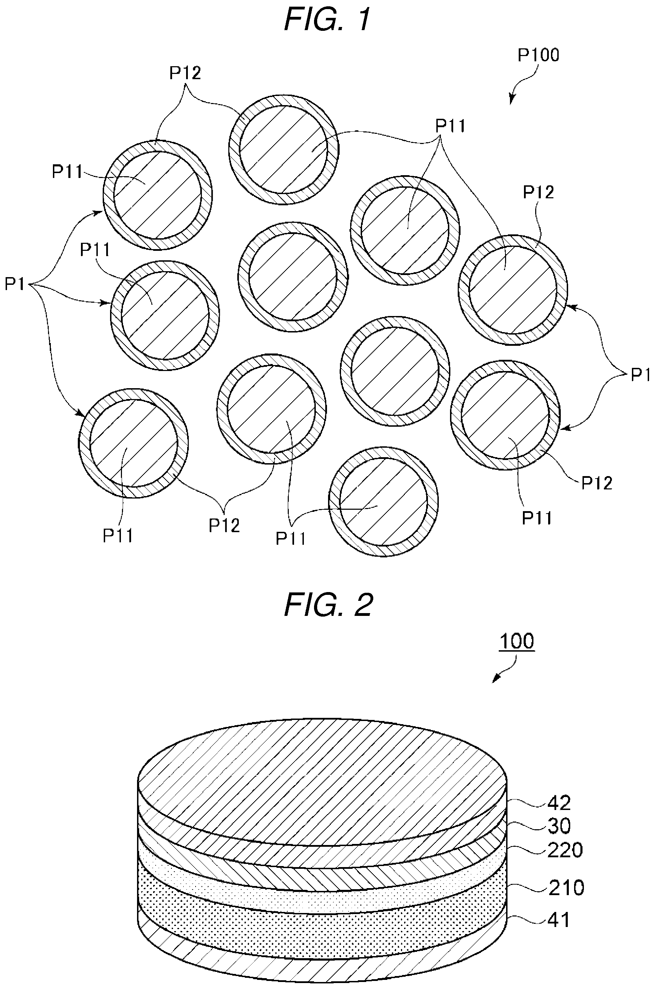

FIG. 1 is a cross-sectional view schematically showing positive electrode active material composite particles according to the present disclosure. In FIG. 1, for the sake of convenience, it is illustrated that the entire surface of a base particle P11 is coated with a coating layer P12, however, the configuration is not limited thereto.

A positive electrode active material composite particle P1 according to the present disclosure is used for forming a positive electrode composite material of a lithium-ion secondary battery, which will be described in detail later. In particular, the positive electrode active material composite particle P1 is generally used as a powder P100 that is an assembly of a plurality of the positive electrode active material composite particles P1. That is, the powder P100 according to the present disclosure includes a plurality of the positive electrode active material composite particles P1. As shown in FIG. 1, the positive electrode active material composite particle P1 includes the base particle P11 and the coating layer P12 that at least partially coats a surface of the base particle P11. The base particle P11 is constituted by a positive electrode active material containing a lithium composite oxide having a layered crystal structure. The coating layer P12 is constituted by a material containing a multiple oxide different from the positive electrode active material, a lithium compound, and an oxoacid compound.

According to this, the positive electrode active material composite particle that can be favorably used for the production of a lithium-ion secondary battery having a small internal resistance, particularly having a small internal resistance in the positive electrode composite material, and having excellent charge-discharge characteristics can be provided. More specifically, by incorporating the oxoacid compound in the coating layer P12, the melting point of the multiple oxide contained in in the coating layer P12 can be lowered. Thereby, the constituent material of the coating layer P12 is converted into a solid electrolyte that is an oxide while promoting the crystal growth by a firing treatment that is a heat treatment at a relatively low temperature for a relatively short time, and also adhesion to the positive electrode active material constituting the base particle P11, adhesion between the solid electrolytes corresponding to the coating layers P12 of the respective positive electrode active material composite particles P1, and the like can be made excellent. As a result, the positive electrode composite material to be formed has a high denseness and a small internal resistance. Further, due to an action capable of causing a reaction in which a lithium ion is incorporated into the multiple oxide contained in the coating layer P12 during the reaction, the solid electrolyte that is a lithium-containing multiple oxide can be formed at a low temperature. Therefore, for example, the decrease in ion conductivity due to volatilization of lithium ions can be suppressed, and it can be favorably applied to the production of an all solid-state battery having excellent charge-discharge characteristics, particularly charge-discharge characteristics at a high load.

On the other hand, when the conditions as described above are not satisfied, satisfactory results are not obtained.

For example, in a case of a composition in which a positive electrode active material that does not have a coating layer and solid electrolyte particles that do not contain a positive electrode active material are used together in place of the positive electrode active material composite particles, when the composition is fired, a gap is likely to remain between the particles, and a positive electrode composite material having a sufficiently high denseness cannot be obtained. As a result, the positive electrode composite material to be obtained has a large internal resistance, and a lithium-ion secondary battery including the positive electrode composite material has poor charge-discharge characteristics.

Further, in a case of a particle which does not include the base particle and is constituted by the constituent material of the coating layer, when a composition containing a plurality of the particles is fired, it is difficult to sufficiently increase the denseness.

Further, even in a case of a particle having a structure in which a coating layer is provided at a surface of a base particle, if the coating layer does not contain an oxoacid compound, an effect of lowering the melting point of the multiple oxide is not obtained, and when the composition containing a plurality of the particles is fired, a gap is likely to remain between the particles, and a positive electrode composite material having a sufficiently high denseness cannot be obtained. As a result, a positive electrode composite material to be obtained has a large internal resistance, and a lithium-ion secondary battery including the positive electrode composite material has poor charge-discharge characteristics.

Further, even in a case of a particle having a structure in which a coating layer is provided at a surface of a base particle, when the coating layer does not contain the multiple oxide, a solid electrolyte that is a lithium-containing multiple oxide cannot be formed.

Further, even in a case of a particle having a structure in which a coating layer is provided at a surface of a base particle, when the coating layer does not contain a lithium compound, a solid electrolyte that is a lithium-containing multiple oxide cannot be formed.

Further, even in a case of a particle having a structure in which a coating layer is provided at a surface of a base particle, when the base particle is constituted by a positive electrode active material other than a lithium composite oxide having a layered crystal structure, there occurs a problem that an undesirable reaction such as pulverization of the particles by dissolution of a constituent element is caused.

As described above, the coating layer P12 is constituted by a material containing a multiple oxide different from the positive electrode active material, a lithium compound, and an oxoacid compound, the oxoacid compound being a metal salt containing an oxoanion and containing at least one of a nitrate ion and a sulfate ion as the oxoanion. As described later, the oxoacid compound may be a compound containing a lithium ion together with the oxoanion. In that case, it can be said that the compound is an oxoacid compound and also is a lithium compound.

Hereinafter, the positive electrode active material composite particle P1 including the base particle P11 and the coating layer P12 that coats the base particle P11 will be described in detail.

### [1-1] Base Particle

The base particle P11 constituting the positive electrode active material composite particle P1 is constituted by a positive electrode active material that can repeat electrochemical occlusion and release of lithium ions, more specifically, a positive electrode active material containing a lithium composite oxide having a layered crystal structure. When the positive electrode active material composite particle P1 is configured to have a core-shell structure, the base particle P11 corresponds to a core in the core-shell structure.

As the lithium composite oxide having a layered crystal structure, for example, a composite oxide containing Li and a transition metal T, or the like is exemplified.

The transition metal T constituting the composite oxide may be any as long as it is an element present between the group 3 element and the group 11 element in the periodic table, but is preferably at least one type selected from the group consisting of vanadium, chromium, manganese, iron, cobalt, nickel, and copper.

Examples of the composite oxide constituting the positive electrode active material include LiCoO₂, LiNiO₂, LiMn₂O₄, Li₂Mn₂O₃, LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄, and one type or a combination of two or more types selected from these can be used. Further, as the composite oxide constituting the positive electrode active material, for example, a fluoride such as LiFeF₃ may be used.

Among these, the positive electrode active material is preferably LiCoO₂.

According to this, the internal resistance of a lithium-ion secondary battery to which the positive electrode active material composite particle P1 is applied, particularly, the internal resistance in the positive electrode composite material can be further decreased, and the charge-discharge characteristics of the lithium-ion secondary battery can be made particularly excellent.

The base particle P11 constituting the positive electrode active material composite particle P1 may contain another component in addition to the lithium composite oxide having a layered crystal structure. Examples of such a component include boride complex compounds such as LiBH₄ and Li₄BN₃H₁₀, iodine complex compounds such as a polyvinylpyridine-iodine complex, and nonmetallic compounds such as sulfur.

However, the content ratio of the component other than the lithium composite oxide having a layered crystal structure in the base particle P11 is preferably 3.0 mass% or less, more preferably 1.0 mass% or less, further more preferably 0.3 mass% or less.

The average particle diameter of the base particle P11 is not particularly limited, but is preferably 1.0 µm or more and 30 µm or less, more preferably 2.0 µm or more and 25 µm or less, further more preferably 3.0 µm or more and 20 µm or less.

According to this, the positive electrode active material composite particle P1 is easily adjusted to a favorable size, and the flowability of the positive electrode active material composite particle P1, and the ease of handling thereof can be made more favorable. Further, for the purpose of making the size of the positive electrode active material composite particle P1 favorable, the thickness of the coating layer P12 or the ratio of the average thickness of the coating layer P12 to the average particle diameter of the base particle P11 is easily adjusted to a numerical value within a favorable range. As a result, the internal resistance of a lithium-ion secondary battery to which the positive electrode active material composite particle P1 is applied can be further decreased, and the charge-discharge characteristics of the lithium-ion secondary battery can be made particularly excellent. Further, this is advantageous also from the viewpoint of improvement of the productivity of the positive electrode active material composite particle P1 and reduction of the production cost.

Note that in the present specification, the average particle diameter refers to a volume-based average particle diameter, and can be determined by, for example, subjecting a dispersion liquid prepared by adding a sample to methanol and dispersing the sample for 3 minutes using an ultrasonic disperser to measurement with a particle size distribution analyzer according to the Coulter counter method (model: TA-II, manufactured by Coulter Electronics, Inc.) using an aperture of 50 µm.

In the drawing, the base particle P11 has a true spherical shape, however, the shape of the base particle P11 is not limited thereto.

The powder P100 may include the positive electrode active material composite particles P1 in which the conditions for the base particles P11 are mutually different. For example, the powder P100 may include the positive electrode active material composite particles P1 in which the particle diameters of the base particles P11 are different, the positive electrode active material composite particles P1 in which the compositions of the base particles P11 are different, or the like as the positive electrode active material composite particles P1 in which the conditions for the base particles P11 are different.

### [1-2] Coating Layer

The coating layer P12 that coats the base particle P11 is constituted by a material containing a multiple oxide different from the positive electrode active material, a lithium compound, and a metal salt containing an oxoanion and containing at least one of a nitrate ion and a sulfate ion as the oxoanion. When the positive electrode active material composite particle P1 is configured to have a core-shell structure, the coating layer P12 corresponds to a shell in the core-shell structure.

### [1-2-1] Multiple Oxide

The multiple oxide constituting the coating layer P12 is different from the positive electrode active material constituting the base particle P11.

Hereinafter, the multiple oxide constituting the coating layer P12 is also referred to as "precursor oxide".

The precursor oxide need only be a multiple oxide different from the positive electrode active material constituting the base particle P11, but it is preferred that the crystal phase at normal temperature and normal pressure of the precursor oxide is different from the crystal phase of a solid electrolyte to be formed by a heat treatment for obtaining the positive electrode composite material using the positive electrode active material composite particle P1.

According to this, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

Note that in the present specification, the normal temperature and normal pressure refers to 25°C and 1 atm. Further, in the present specification, the "different" in terms of crystal phase is a broad concept not only including that the type of crystal phase is not the same, but also including that even if the type is the same, at least one lattice constant is different, or the like.

The crystal phase of the precursor oxide may be any, but is preferably a pyrochlore-type crystal.

According to this, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

The crystal phase of the precursor oxide may be a crystal phase other than the pyrochlore-type crystal, for example, a cubic crystal such as a perovskite structure, a rock salt-type structure, a diamond structure, a fluorite-type structure, or a spinel-type structure, an orthorhombic crystal such as a ramsdellite type, a trigonal crystal such as a corundum type, or the like.

The composition of the precursor oxide is not particularly limited, however, the precursor oxide is preferably a multiple oxide containing La, Zr, and M when M is at least one type of element selected from the group consisting of Nb, Ta, and Sb.

According to this, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

The M need only be at least one type of element selected from the group consisting of Nb, Ta, and Sb, but is preferably two or more types of elements selected from the group consisting of Nb, Ta, and Sb.

According to this, the above-mentioned effect is more remarkably exhibited.

When M is one or more types of metal elements selected from Ta, Sb, and Nb, a substance amount ratio of La, Zr, and M contained in the multiple oxide is 3:2-x:x, and it is preferred to satisfy a relationship: 0 < x < 2.0.

According to this, the above-mentioned effect is more remarkably exhibited.

The crystal grain diameter of the precursor oxide is not particularly limited, but is preferably 10 nm or more and 200 nm or less, more preferably 15 nm or more and 180 nm or less, further more preferably 20 nm or more and 160 nm or less.

According to this, due to a so-called Gibbs-Thomson effect that is a phenomenon of lowering the melting point with an increase in surface energy, the melting temperature of the precursor oxide or the firing temperature of the positive electrode active material composite particle P1 can be further lowered. In addition, it is also advantageous for improving the joining of the positive electrode composite material to be formed using the positive electrode active material composite particle P1 to a different type of material, or for reducing the defect density.

The precursor oxide is preferably constituted by a substantially single crystal phase.

According to this, the precursor oxide undergoes crystal phase transition substantially once when producing the positive electrode composite material using the positive electrode active material composite particle P1, that is, when generating a high-temperature crystal phase, and therefore, segregation of elements accompanying the crystal phase transition or generation of a contaminant crystal by thermal decomposition is suppressed, so that various characteristics of the positive electrode composite material to be produced are further improved.

In a case where only one exothermic peak is observed within a range of 300°C or higher and 1,000°C or lower when measurement is performed by TG-DTA at a temperature raising rate of 10°C/min for the positive electrode active material composite particle P1, it can be determined that "it is constituted by a substantially single crystal phase".

The content ratio of the precursor oxide in the coating layer P12 is not particularly limited, but is preferably 35 mass% or more and 75 mass% or less, more preferably 45 mass% or more and 65 mass% or less, further more preferably 55 mass% or more and 60 mass% or less.

According to this, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

The positive electrode active material composite particle P1 may contain multiple types of precursor oxides. When the positive electrode active material composite particle P1 contains multiple types of precursor oxides, as the value of the content ratio of the precursor oxide in the positive electrode active material composite particle P1, the sum of the content ratios of the precursor oxides shall be adopted.

### [1-2-2] Lithium Compound

The coating layer P12 contains a lithium compound.

According to this, the solid electrolyte to be formed from the coating layer P12 can be made composed of a lithium-containing multiple oxide, and the characteristics such as ion conductance can be made excellent.

Examples of the lithium compound contained in the coating layer P12 include inorganic salts such as LiH, LiF, LiCl, LiBr, Lil, LiClO, LiClO₄, LiNO₃, LiNO₂, Li₃N, LiN₃, LiNH₂, Li₂SO₄, Li₂S, LiOH, and Li₂CO₃, carboxylates such as lithium formate, lithium acetate, lithium propionate, lithium 2-ethylhexanoate, and lithium stearate, hydroxy acid salts such as lithium lactate, lithium malate, and lithium citrate, dicarboxylates such as lithium oxalate, lithium malonate, and lithium maleate, alkoxides such as lithium methoxide, lithium ethoxide, and lithium isopropoxide, alkylated lithium such as methyl lithium and n-butyl lithium, sulfate esters such as lithium n-butyl sulfate, lithium n-hexyl sulfate, and lithium dodecyl sulfate, diketone complexes such as lithium 2,4-pentanedionate, and hydrates thereof, and derivatives thereof such as a halogen-substituted substance, and one type or a combination of two or more types selected from these can be used.

Among these, as the lithium compound, one type or two types selected from the group consisting of Li₂CO₃ and LiNO₃ are preferred.

According to this, the above-mentioned effect is more remarkably exhibited.

The content ratio of the lithium compound in the coating layer P12 is not particularly limited, but is preferably 10 mass% or more and 20 mass% or less, more preferably 12 mass% or more and 18 mass% or less, further more preferably 15 mass% or more and 17 mass% or less.

According to this, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

When the content ratio of the precursor oxide in the coating layer P12 is represented by XP [mass%] and the content ratio of the lithium compound in the coating layer P12 is represented by XL [mass%], it is preferred to satisfy a relationship: 0.13 ≤ XL/XP ≤ 0.58, it is more preferred to satisfy a relationship: 0.18 ≤ XL/XP ≤ 0.4, and it is further more preferred to satisfy a relationship: 0.25 ≤ XL/XP ≤ 0.3.

According to this, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

The coating layer P12 may contain multiple types of lithium compounds. When the coating layer P12 contains multiple types of lithium compounds, as the value of the content ratio of the lithium compound in the coating layer P12, the sum of the content ratios of the lithium compounds shall be adopted.

### [1-2-3] Oxoacid Compound

The coating layer P12 contains an oxoacid compound, which is a metal salt containing an oxoanion and containing at least one of a nitrate ion and a sulfate ion as the oxoanion.

By incorporating the oxoacid compound in this manner, the melting point of the precursor oxide is favorably lowered, and the crystal growth of the lithium-containing multiple oxide can be promoted. Further, even if the heat treatment for the positive electrode active material composite particle P1 is performed at a low temperature for a short time, the internal resistance in the positive electrode composite material to be produced can be further decreased, and it can be favorably used for the production of a lithium-ion secondary battery having excellent charge-discharge characteristics.

In particular, the oxoacid compound preferably contains, as the oxoanion, a nitrate ion.

By incorporating the oxoacid compound in this manner, the melting point of the precursor oxide is favorably lowered, and the crystal growth of the lithium-containing multiple oxide can be promoted. Further, even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

A metal cation constituting the oxoacid compound is not particularly limited, and examples thereof include a lithium ion, a lanthanum ion, a zirconium ion, a niobium ion, a tantalum ion, and an antimony ion, and one type or a combination of two or more types selected from these can be used, however, it is preferably an ion of a constituent metal element of the solid electrolyte to be formed from the coating layer P12.

According to this, an undesirable impurity can be more effectively prevented from remaining in the solid electrolyte to be formed.

When the oxoacid compound is a compound containing a lithium ion together with an oxoanion, it can be said that the compound is an oxoacid compound and also is a lithium compound.

The content ratio of the oxoacid compound in the coating layer P12 is not particularly limited, but is preferably 0.1 mass% or more and 20 mass% or less, more preferably 1.5 mass% or more and 15 mass% or less, further more preferably 2.0 mass% or more and 10 mass% or less.

According to this, the oxoacid compound is more reliably prevented from undesirably remaining in the solid electrolyte to be formed from the coating layer P12, and even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

When the content ratio of the precursor oxide in the coating layer P12 is represented by XP [mass%] and the content ratio of the oxoacid compound in the coating layer P12 is represented by XO [mass%], it is preferred to satisfy a relationship: 0.013 ≤ XO/XP ≤ 0.58, it is more preferred to satisfy a relationship: 0.023 ≤ XO/XP ≤ 0.34, and it is further more preferred to satisfy a relationship: 0.03 ≤ XO/XP ≤ 0.19.

According to this, the oxoacid compound is more reliably prevented from undesirably remaining in the solid electrolyte to be formed from the coating layer P12, and even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

When the content ratio of the lithium compound in the coating layer P12 is represented by XL [mass%] and the content ratio of the oxoacid compound in the coating layer P12 is represented by XO [mass%], it is preferred to satisfy a relationship: 0.05 ≤ XO/XL ≤ 2, it is more preferred to satisfy a relationship: 0.08 ≤ XO/XL ≤ 1.25, and it is further more preferred to satisfy a relationship: 0.11 ≤ XO/XL ≤ 0.67.

According to this, the oxoacid compound is more reliably prevented from undesirably remaining in the solid electrolyte to be formed from the coating layer P12, and even if the heat treatment for the positive electrode active material composite particle P1 is performed at a lower temperature for a shorter time, the internal resistance in the positive electrode composite material to be produced can be further decreased, and it can be favorably used for the production of a lithium-ion secondary battery having excellent charge-discharge characteristics.

The coating layer P12 may contain multiple types of oxoacid compounds. When the coating layer P12 contains multiple types of oxoacid compounds, as the value of the content ratio of the oxoacid compound in the coating layer P12, the sum of the content ratios of the oxoacid compounds shall be adopted.

### [1-2-4] Another Component

The coating layer P12 contains the precursor oxide, the lithium compound, and the oxoacid compound as described above, but may further contain a component other than these. Hereinafter, among the components constituting the coating layer P12, a component other than the precursor oxide, the lithium compound, and the oxoacid compound is referred to as "another component".

As such another component contained in the coating layer P12, for example, a positive electrode active material, a solid electrolyte, a solvent component used in the production process for the positive electrode active material composite particle P1, or the like is exemplified.

The content ratio of such another component in the coating layer P12 is not particularly limited, but is preferably 10 mass% or less, more preferably 5.0 mass% or less, further more preferably 0.5 mass% or less.

The coating layer P12 may contain multiple types of components as such another component. In that case, as the value of the content ratio of another component in the coating layer P12, the sum of the content ratios of the components shall be adopted.

When M is at least one type of element selected from the group consisting of Nb, Ta, and Sb, the coating layer P12 preferably contains Li, La, Zr, and M. In particular, a substance amount ratio of Li, La, Zr, and M contained in the coating layer P12 is 7-x:3:2-x:x, and it is preferred to satisfy a relationship: 0 < x < 2.0.

According to this, the internal resistance in the positive electrode composite material to be produced using the positive electrode active material composite particle P1 can be further decreased, and a lithium-ion secondary battery having more excellent charge-discharge characteristics can be favorably produced.

Here, x satisfies the condition: 0 < x < 2.0, but preferably satisfies a condition: 0.01 < x < 1.7, more preferably satisfies a condition: 0.1 < x < 1.25, and further more preferably satisfies a condition: 0.2 < x < 1.0.

According to this, the above-mentioned effect is more remarkably exhibited.

The average thickness of the coating layer P12 is preferably 0.002 µm or more and 3.0 µm or less, more preferably 0.03 µm or more and 2.0 µm or less, further more preferably 0.05 µm or more and 1.5 µm or less.

According to this, the size of the positive electrode active material composite particle P1 and the ratio of the average thickness of the coating layer P12 to the average particle diameter of the base particle P11 are easily adjusted within a more favorable range. As a result, for example, the flowability of the positive electrode active material composite particle P1, and the ease of handling thereof are made more favorable, and further, the internal resistance in the positive electrode composite material to be produced using the positive electrode active material composite particle P1 can be further decreased, and it can be favorably applied to the production of a lithium-ion secondary battery having more excellent charge-discharge characteristics.

Note that in the present specification, the average thickness of the coating layer P12 refers to a thickness of the coating layer P12 determined from a ratio of the base particle P11 to the coating layer P12 contained in the entire powder P100 when it is assumed that each base particle P11 has a true spherical shape having the same diameter as the average particle diameter thereof, and the coating layer P12 having a uniform thickness is formed at the entire outer surface of each base particle P11.

Further, when the average particle diameter of the base particle P11 is represented by D [µm] and the average thickness of the coating layer P12 is represented by T [µm], it is preferred to satisfy a relationship: 0.0004 ≤ T/D ≤ 1.0, it is more preferred to satisfy a relationship: 0.0010 ≤ T/D ≤ 0.30, and it is further more preferred to satisfy a relationship: 0.0020 ≤ T/D ≤ 0.15.

According to this, the size of the positive electrode active material composite particle P1 and the ratio of the average thickness of the coating layer P12 to the average particle diameter of the base particle P11 are easily adjusted within a more favorable range. As a result, for example, the flowability of the positive electrode active material composite particle P1, and the ease of handling thereof are made more favorable, and further, the internal resistance in the positive electrode composite material to be produced using the positive electrode active material composite particle P1 can be further decreased, and it can be favorably applied to the production of a lithium-ion secondary battery having more excellent charge-discharge characteristics.

The coating layer P12 may be any as long as the layer at least partially coats the surface of the base particle P11, and a coating ratio of the coating layer P12 to the outer surface of the base particle P11, that is, the ratio of the area of a coating portion of the coating layer P12 to the entire area of the outer surface of the base particle P11 is not particularly limited, but is preferably 10% or more, more preferably 20% or more, further more preferably 30% or more. Further, the upper limit of the coating ratio may be 100% or less than 100%.

According to this, the internal resistance in the positive electrode composite material to be produced using the positive electrode active material composite particle P1 can be further decreased, and a lithium-ion secondary battery having more excellent charge-discharge characteristics can be favorably produced.

The ratio of the mass of the coating layer P12 to the total mass of the positive electrode active material composite particle P1 is preferably 0.0001 mass% or more and 150 mass% or less, more preferably 0.001 mass% or more and 120 mass% or less, further more preferably 0.01 mass% or more and 100 mass% or less.

The coating layer P12 constituting the positive electrode active material composite particle P1 may include portions having different conditions. For example, the coating layer P12 includes a first portion that partially coats the surface of the base particle P11, and a second portion that coats a surface, which is not coated with the first portion, of the base particle P11, and the first portion and the second portion may have different compositions. Further, the coating layer P12 constituting the positive electrode active material composite particle P1 may be a stacked body including a plurality of layers having different compositions. In addition, the coating layer P12 that coats the base particle P11 may have a plurality of regions having mutually different thicknesses.

The powder P100 may include the positive electrode active material composite particles P1 in which the conditions for the coating layers P12 are mutually different. For example, the powder P100 may include the positive electrode active material composite particles P1 in which the thicknesses of the coating layers P12 are different, the positive electrode active material composite particles P1 in which the compositions of the coating layers P12 are different, or the like as the positive electrode active material composite particles P1 in which the conditions for the coating layers P12 are different.

### [1-3] Another Member

The positive electrode active material composite particle P1 needs only include the base particle P11 and the coating layer P12 described above, and may further include another member. As such a member, for example, at least one layer of an intermediate layer provided between the base particle P11 and the coating layer P12, another coating layer that is provided in a portion, which is not coated with the coating layer P12, of the outer surface of the base particle P11, and that is constituted by a material different from the coating layer P12, or the like is exemplified.

However, the proportion of the member other than the base particle P11 and the coating layer P12 in the positive electrode active material composite particle P1 is preferably 3.0 mass% or less, more preferably 1.0 mass% or less, further more preferably 0.3 mass% or less.

Further, the powder P100 need only include a plurality of the positive electrode active material composite particles P1, but may further include another member in addition to the positive electrode active material composite particles P1.

As such a member, for example, a particle that is constituted by the same material as the base particle P11 and that is not coated with the coating layer P12, a particle that is constituted by the same material as the base particle P11 and that is coated with a material other than the coating layer P12, a particle that is constituted by the same material as the coating layer P12 and that is not adhered to the base particle P11, or the like is exemplified.

However, the proportion of the member other than the positive electrode active material composite particles P1 in the powder P100 is preferably 20 mass% or less, more preferably 10 mass% or less, further more preferably 5 mass% or less.

The boundary between the base particle P11 and the coating layer P12 may be clear as shown in FIG. 1, but the boundary need not necessarily be clear, and for example, some constituent components of one of the base particle P11 and the coating layer P12 may transfer to the other.

Further, in the powder P100, it is preferred that among the positive electrode active material composite particles P1 constituting the powder P100, half or more of the positive electrode active material composite particles P1 satisfy the above-mentioned conditions. In addition, as for the conditions for the numerical values among the preferred conditions for the positive electrode active material composite particles P1 described above, it is preferred that the average for the respective positive electrode active material composite particles P1 is satisfied.

### [2] Production Method for Positive Electrode Active Material Composite Particles

Next, a production method for positive electrode active material composite particles will be described.

The positive electrode active material composite particles can be favorably produced using, for example, a method including a mixed liquid preparation step, a drying step, and a multiple oxide formation step.

The mixed liquid preparation step is a step of preparing a mixed liquid in which a lithium compound and a metal compound containing a metal element other than lithium are dissolved and also particles of a positive electrode active material are dispersed.

The drying step is a step of removing a liquid component from the mixed liquid, thereby obtaining a mixture in a solid state.

The multiple oxide formation step is a step of forming a multiple oxide by performing a heat treatment for the mixture in a solid state to cause a reaction of the metal compounds, thereby forming the coating layer P12 constituted by a material containing the multiple oxide different from the positive electrode active material, a lithium compound, and an oxoacid compound at surfaces of the particles of the positive electrode active material, which are used as the base particles P11.

According to this, the positive electrode active material composite particles that can be favorably used for the production of a lithium-ion secondary battery having a small internal resistance and excellent charge-discharge characteristics can be efficiently produced.

Hereinafter, the respective steps will be described.

### [2-1] Mixed Liquid Preparation Step

In the mixed liquid preparation step, a mixed liquid in which a lithium compound and a metal compound containing a metal element other than lithium are dissolved and also particles of a positive electrode active material are dispersed is prepared.

More specifically, for example, when a solid electrolyte to be formed from the coating layer P12 is a garnet-type solid electrolyte represented by the following formula (1), in the mixed liquid preparation step, an example that when M is at least one type of element selected from the group consisting of Nb, Ta, and Sb, a mixed liquid in which a metal compound containing a metal element M, a lithium compound, a lanthanum compound, and a zirconium compound are dissolved, and also particles of a positive electrode active material are dispersed is prepared is exemplified.

Li_{7-×}La₃(Zr₂₋ₓMₓ)O₁₂ (1)

In the formula (1), M is one or more types of metal elements selected from Ta, Sb, and Nb, and x satisfies 0.1 ≤ x < 0.7.

In the following description, a case where the solid electrolyte to be formed from the coating layer P12 is a garnet-type solid electrolyte represented by the above formula (1), and the above-mentioned mixed liquid is prepared will be mainly described.

The order of mixing of the respective components constituting the mixed liquid is not particularly limited, but for example, the mixed liquid can be obtained by mixing a lithium raw material solution in which a lithium compound is dissolved, a lanthanum raw material solution in which a lanthanum compound is dissolved, a zirconium raw material solution in which a zirconium compound is dissolved, a metal raw material solution in which a metal compound containing a metal element M is dissolved, and the particles of the positive electrode active material.

Further, in such a case, for example, the lithium raw material solution, the lanthanum raw material solution, the zirconium raw material solution, and the metal raw material solution may be mixed prior to mixing with the particles of the positive electrode active material. In other words, for example, the particles of the positive electrode active material may be mixed with a mixed solution of the lithium raw material solution, the lanthanum raw material solution, the zirconium raw material solution, and the metal raw material solution.

In such a case, the particles of the positive electrode active material may be subjected to mixing with the solution in a state of a dispersion liquid in which the particles of the positive electrode active material are dispersed in a dispersion medium.

As described above, when multiple types of liquids are used in the mixed liquid preparation step, with respect to these solutions and the dispersion liquid, the solvents and the dispersion medium as the constituent components may have a common composition, or may have different compositions.

In the mixed liquid preparation step, it is preferred to use the lithium compound so that the content ratio of lithium in the mixed liquid becomes 1.05 times or more and 1.2 times or less with respect to the stoichiometric composition of the above formula (1).

Further, in the mixed liquid preparation step, it is preferred to use the lanthanum compound so that the content ratio of lanthanum in the mixed liquid is equivalent to the stoichiometric composition of the above formula (1).

Further, in the mixed liquid preparation step, it is preferred to use the zirconium compound so that the content ratio of zirconium in the mixed liquid is equivalent to the stoichiometric composition of the above formula (1).

Further, in the mixed liquid preparation step, it is preferred to use the metal compound containing the metal element M so that the content ratio of M in the mixed liquid is equivalent to the stoichiometric composition of the above formula (1).

Examples of the lithium compound include lithium metal salts and lithium alkoxides, and among these, one type or a combination of two or more types can be used. Examples of the lithium metal salts include lithium chloride, lithium nitrate, lithium sulfate, lithium acetate, lithium hydroxide, lithium carbonate, and (2,4-pentanedionato)lithium. Further, examples of the lithium alkoxides include lithium methoxide, lithium ethoxide, lithium propoxide, lithium isopropoxide, lithium butoxide, lithium isobutoxide, lithium sec-butoxide, lithium tert-butoxide, and lithium dipivaloylmethanate. Among these, as the lithium compound, one type or two or more types selected from the group consisting of lithium nitrate, lithium sulfate, and (2,4-pentanedionato)lithium are preferred. As the lithium source, a hydrate may be used.

Further, examples of the lanthanum compound that is a metal compound as a lanthanum source include lanthanum metal salts, lanthanum alkoxides, and lanthanum hydroxide, and among these, one type or a combination of two or more types can be used. Examples of the lanthanum metal salts include lanthanum chloride, lanthanum nitrate, lanthanum sulfate, lanthanum acetate, and tris(2,4-pentanedionato)lanthanum. Examples of the lanthanum alkoxides include lanthanum trimethoxide, lanthanum triethoxide, lanthanum tripropoxide, lanthanum triisopropoxide, lanthanum tributoxide, lanthanum triisobutoxide, lanthanum tri-sec-butoxide, lanthanum tri-tert-butoxide, and lanthanum dipivaloylmethanate. Among these, as the lanthanum compound, at least one type selected from the group consisting of lanthanum nitrate, tris(2,4-pentanedionato)lanthanum, and lanthanum hydroxide is preferred. As the lanthanum source, a hydrate may be used.

Further, examples of the zirconium compound that is a metal compound as a zirconium source include zirconium metal salts and zirconium alkoxides, and among these, one type or a combination of two or more types can be used. Examples of the zirconium metal salts include zirconium chloride, zirconium oxychloride, zirconium oxynitrate, zirconium oxysulfate, zirconium oxyacetate, and zirconium acetate. Further, examples of the zirconium alkoxides include zirconium tetramethoxide, zirconium tetraethoxide, zirconium tetrapropoxide, zirconium tetraisopropoxide, zirconium tetrabutoxide, zirconium tetraisobutoxide, zirconium tetra-sec-butoxide, zirconium tetra-tert-butoxide, and zirconium dipivaloylmethanate. Among these, as the zirconium compound, zirconium tetraisobutoxide is preferred. As the zirconium source, a hydrate may be used.

Further, examples of a tantalum compound that is a metal compound as a tantalum source of the metal element M include tantalum metal salts and tantalum alkoxides, and among these, one type or a combination of two or more types can be used. Examples of the tantalum metal salts include tantalum chloride and tantalum bromide. Further, examples of the tantalum alkoxides include tantalum pentamethoxide, tantalum pentaethoxide, tantalum pentaisopropoxide, tantalum penta-n-propoxide, tantalum pentaisobutoxide, tantalum penta-n-butoxide, tantalum penta-sec-butoxide, and tantalum penta-tert-butoxide. Among these, as the tantalum compound, tantalum pentaethoxide is preferred. As the tantalum source, a hydrate may be used.

Further, examples of an antimony compound that is a metal compound as an antimony source of the metal element M include antimony metal salts and antimony alkoxides, and among these, one type or a combination of two or more types can be used. Examples of the antimony metal salts include antimony bromide, antimony chloride, and antimony fluoride. Further, examples of the antimony alkoxides include antimony trimethoxide, antimony triethoxide, antimony triisopropoxide, antimony tri-n-propoxide, antimony triisobutoxide, and antimony tri-n-butoxide. Among these, as the antimony compound, antimony triisobutoxide is preferred. As the antimony source, a hydrate may be used.

Further, examples of a niobium compound that is a metal compound as a niobium source of the metal element M include niobium metal salts, niobium alkoxides, and niobium acetylacetone, and among these, one type or a combination of two or more types can be used. Examples of the niobium metal salts include niobium chloride, niobium oxychloride, and niobium oxalate. Further, examples of the niobium alkoxides include niobium ethoxide such as niobium pentaethoxide, niobium propoxide, niobium isopropoxide, and niobium sec-butoxide. Among these, as the niobium compound, niobium pentaethoxide is preferred. As the niobium source, a hydrate may be used.

As the particles of the positive electrode active material to be used in the preparation of the mixed liquid, for example, particles that satisfy the same conditions as the above-mentioned base particles P11 can be favorably used.

As the particles of the positive electrode active material, for example, particles having different conditions from those of the base particles P11, particularly having a particle diameter condition different from that of the base particles P11, may be used in consideration of pulverization, aggregation, or the like in the production process for the positive electrode active material composite particles P1.

The solvent or the dispersion medium is not particularly limited, and for example, various types of organic solvents can be used, however, more specifically, for example, alcohols, glycols, ketones, esters, ethers, organic acids, aromatics, and amides are exemplified, and one type or a mixed solvent that is a combination of two or more types selected from these can be used. Examples of the alcohols include methyl alcohol, ethyl alcohol, n-propyl alcohol, isopropyl alcohol, n-butyl alcohol, allyl alcohol, and 2-n-butoxyethanol. Examples of the glycols include ethylene glycol, propylene glycol, butylene glycol, hexylene glycol, pentanediol, hexanediol, heptanediol, and dipropylene glycol. Examples of the ketones include dimethyl ketone, methyl ethyl ketone, methyl propyl ketone, and methyl isobutyl ketone. Examples of the esters include methyl formate, ethyl formate, methyl acetate, and methyl acetoacetate. Examples of the ethers include diethylene glycol monomethyl ether, diethylene glycol monoethyl ether, diethylene glycol dimethyl ether, ethylene glycol monomethyl ether, ethylene glycol monoethyl ether, and dipropylene glycol monomethyl ether. Examples of the organic acids include formic acid, acetic acid, 2-ethylbutyric acid, and propionic acid. Examples of the aromatics include toluene, o-xylene, and p-xylene. Examples of the amides include formamide, N,N-dimethylformamide, N,N-diethylformamide, dimethylacetamide, and N-methylpyrrolidone. Among these, as the solvent or the dispersion medium, at least one of 2-n-butoxyethanol and propionic acid is preferred.

Further, the mixed liquid prepared in this step preferably contains an oxoanion.

According to this, an oxoacid compound can be favorably incorporated in the positive electrode active material composite particles P1 to be finally obtained, and the above-mentioned effect can be more favorably exhibited. Further, the productivity of the positive electrode active material composite particles P1 can be made excellent as compared with a case where an oxoanion is incorporated in a step later than this step. In addition, an undesirable variation in the composition in the positive electrode active material composite particles P1 to be finally obtained can be more effectively prevented.

In this step, when the mixed liquid is prepared as a liquid containing an oxoanion, it is preferred to use metal salts containing an oxoanion as the various types of metal compounds serving as the raw materials for forming the coating layer P12 described above, however, in the preparation of the mixed liquid, an oxoacid compound containing an oxoanion may be further used as a component different from the various types of metal compounds.

The oxoanion is at least one of a nitrate ion and a sulfate ion.

The oxoacid compound may be added at the timing later than the mixed liquid preparation step.

### [2-2] Drying Step

The drying step is a step of removing a liquid component from the mixed liquid obtained in the mixed liquid preparation step, thereby obtaining a mixture in a solid state. Note that in the mixture in a solid state here, a mixture, a portion of which is in a gel state, shall also be included.

The mixture in a solid state obtained in this step need only be a mixture in which the liquid component contained in the mixed liquid, that is, the above-mentioned solvent or dispersion medium is at least partially removed, and need not be a mixture in which all the liquid component is removed.

This step can be carried out by performing, for example, a treatment using a centrifuge for the mixed liquid obtained in the mixed liquid preparation step, and removing the supernatant.

For the precipitate separated from the supernatant by centrifugation, further, a series of treatments of mixing with the mixed liquid, ultrasonic dispersion, and centrifugation may be performed predetermined times. By doing this, the thickness of the coating layer P12 can be favorably adjusted.

Further, this step may be carried out by performing, for example, a heat treatment.

In that case, although the conditions for the heat treatment depend on the boiling point or vapor pressure of the solvent or the dispersion medium, or the like, the heating temperature in the heat treatment is preferably 50°C or higher and 250°C or lower, more preferably 60°C or higher and 230°C or lower, further more preferably 80°C or higher and 200°C or lower.

Further, the heating time in the heat treatment is preferably 10 minutes or more and 180 minutes or less, more preferably 20 minutes or more and 120 minutes or less, further more preferably 30 minutes or more and 60 minutes or less.

The heat treatment may be performed in any atmosphere, and may be performed in an oxidizing atmosphere such as in the air or in an oxygen gas atmosphere, or may be performed in a non-oxidizing atmosphere of an inert gas such as nitrogen gas, helium gas, or argon gas, or the like. Further, the heat treatment may be performed under reduced pressure or vacuum, or under pressure.

Further, in the heat treatment, the atmosphere may be maintained under substantially the same conditions, or may be changed to different conditions.

Further, in this step, treatments as described above may be performed in combination.

### [2-3] Multiple Oxide Formation Step

In the multiple oxide formation step, a multiple oxide is formed by performing a heat treatment for the mixture in a solid state obtained in the drying step to cause a reaction of the metal compounds, thereby forming the coating layer P12 constituted by a material containing the multiple oxide different from the positive electrode active material, the lithium compound, and the oxoacid compound at surfaces of the particles of the positive electrode active material, which are used as the base particles P11.

The multiple oxide formed in this step is different from the positive electrode active material constituting the base particles P11.

The heat treatment in this step may be performed under fixed conditions or may be performed by combining different conditions.

Although the conditions for the heat treatment in this step depend on the composition of the precursor oxide to be formed, or the like, the heating temperature in this step is preferably 400°C or higher and 600°C or lower, more preferably 430°C or higher and 570°C or lower, further more preferably 450°C or higher and 550°C or lower.

Further, the heating time in this step is preferably 5 minutes or more and 180 minutes or less, more preferably 10 minutes or more and 120 minutes or less, further more preferably 15 minutes or more and 60 minutes or less.

The heat treatment in this step may be performed in any atmosphere, and may be performed in an oxidizing atmosphere such as in the air or in an oxygen gas atmosphere, or may be performed in a non-oxidizing atmosphere of an inert gas such as nitrogen gas, helium gas, or argon gas, or the like. Further, this step may be performed under reduced pressure or vacuum, or under pressure. In particular, this step is preferably performed in an oxidizing atmosphere.

### [3] Production Method for Positive Electrode Composite Material

Next, a production method for a positive electrode composite material using the above-mentioned positive electrode active material composite particles will be described.

The positive electrode composite material can be favorably produced by, for example, a method including a molding step of molding a composition including a plurality of the positive electrode active material composite particles P1 according to the present disclosure described above, thereby obtaining a molded body, and a heat treatment step of performing a heat treatment for the molded body so as to convert the constituent material of the coating layer into a solid electrolyte, thereby obtaining a positive electrode composite material containing the positive electrode active material and the solid electrolyte.

According to this, the positive electrode composite material that can be favorably used for the production of a lithium-ion secondary battery having a small internal resistance and excellent charge-discharge characteristics can be efficiently obtained.

### [3-1] Molding Step

In the molding step, a composition including a plurality of the positive electrode active material composite particles P1 according to the present disclosure described above is molded, whereby a molded body is obtained.

In this step, as the composition, the above-mentioned powder P100 itself can be used. Further, when the powder P100 is used, for example, two or more types of powders P100, in which conditions for the positive electrode active material composite particles P1 to be included, more specifically, conditions such as the average particle diameter of the positive electrode active material composite particles P1, the size or composition of the base particle P11 constituting the positive electrode active material composite particle P1, or the thickness or composition of the coating layer P12 are different, may be mixed and used. Further, as the composition, one containing another component may be used in addition to the powder P100.

Examples of such a component include a dispersion medium for dispersing the positive electrode active material composite particles P1, a positive electrode active material that is not provided with the coating layer, solid electrolyte particles, composite particles in which the base particles P11 of the positive electrode active material composite particles P1 are replaced with a component other than the lithium composite oxide having a layered crystal structure, composite particles in which the coating layer P12 of the positive electrode active material composite particles P1 is replaced with another material, particles constituted by a material exemplified as the constituent material of the coating layer P12 of the positive electrode active material composite particles P1, and a binder.

In particular, by using a dispersion medium, for example, the composition can be formed into a paste or the like, so that the flowability of the composition, and the ease of handling thereof are improved.

However, the content ratio of such another component in the composition is preferably 20 mass% or less, more preferably 10 mass% or less, further more preferably 5 mass% or less.

Further, after obtaining the molded body using the composition, another component may be imparted to the molded body for the purpose of improving the stability of the shape of the molded body or the performance of the positive electrode composite material to be produced, or the like.

As a molding method for obtaining the molded body, various molding methods can be adopted, and examples thereof include compression molding, extrusion molding, injection molding, various printing methods, and various coating methods.

The shape of the molded body obtained in this step is not particularly limited, but is generally a shape corresponding to the shape of the target positive electrode composite material. The molded body obtained in this step, for example, may have a shape and a size different from the target positive electrode composite material in consideration of a portion to be removed in a later step, a shrinkage in the heat treatment step, or the like.

### [3-2] Heat Treatment Step

In the heat treatment step, a heat treatment is performed for the molded body obtained in the molding step. By doing this, the coating layer P12 is converted into a solid electrolyte, whereby a positive electrode composite material containing the positive electrode active material and the solid electrolyte is obtained.

The positive electrode composite material obtained in this manner not only has excellent adhesion between the positive electrode active material and the solid electrolyte, but also has excellent adhesion between respective regions corresponding to a plurality of the positive electrode active material composite particles P1, and an undesirable void is effectively prevented from occurring therebetween. Therefore, the obtained positive electrode composite material has excellent ion conductance and high denseness. By such a positive electrode composite material, the charge-discharge characteristics of a lithium-ion secondary battery can be made excellent.

The heating temperature of the molded body in the heat treatment step is not particularly limited, but is preferably 700°C or higher and 1000°C or lower, more preferably 730°C or higher and 980°C or lower, further more preferably 750°C or higher and 950°C or lower.

By performing heating at such a temperature, undesirable volatilization of the positive electrode active material composite particle P1, particularly a component having relatively high volatility such as Li can be more reliably prevented during heating while making the denseness of the positive electrode composite material to be obtained sufficiently high, and the positive electrode composite material having a desired composition can be more reliably obtained. Further, since the heating treatment is performed at a relatively low temperature, it is advantageous also from the viewpoint of saving energy, improvement of the productivity of the positive electrode composite material, and the like.

In this step, the heating temperature may be changed. For example, this step may include a first stage in which the heat treatment is performed while maintaining a relatively low temperature, and a second stage in which the temperature is raised after the first stage, and the heat treatment is performed at a relatively high temperature. In such a case, it is preferred that the highest temperature in this step falls within the above-mentioned range.

The heating time in this step is not particularly limited, but is preferably 5 minutes or more and 300 minutes or less, more preferably 10 minutes or more and 120 minutes or less, further more preferably 15 minutes or more and 60 minutes or less.

According to this, the above-mentioned effect is more remarkably exhibited.

This step may be performed in any atmosphere, and may be performed in an oxidizing atmosphere such as in the air or in an oxygen gas atmosphere, or may be performed in a non-oxidizing atmosphere of an inert gas such as nitrogen gas, helium gas, or argon gas, or the like. Further, this step may be performed under reduced pressure or vacuum, or under pressure. In particular, this step is preferably performed in an oxidizing atmosphere.

Further, in this step, the atmosphere may be maintained under substantially the same conditions, or may be changed to different conditions.

The positive electrode composite material obtained as described above generally does not substantially contain the oxoacid compound contained in the positive electrode active material composite particles according to the present disclosure used as the raw material. More specifically, the content ratio of the oxoacid compound in the positive electrode composite material is generally 100 ppm or less, and particularly, it is preferably 50 ppm or less, more preferably 10 ppm or less.

According to this, the content ratio of an undesirable impurity in the positive electrode composite material can be suppressed, and the characteristics and reliability of the positive electrode composite material can be made more excellent.

### [4] Lithium-Ion Secondary Battery

Next, a lithium-ion secondary battery to which the present disclosure is applied will be described.

The lithium-ion secondary battery according to the present disclosure is produced using the positive electrode active material composite particles according to the present disclosure as described above, and can be produced by, for example, applying the production method for a positive electrode composite material described above.

Such a lithium-ion secondary battery has a small internal resistance and excellent charge-discharge characteristics.

### [4-1] Lithium-Ion Secondary Battery of First Embodiment

Hereinafter, a lithium-ion secondary battery according to a first embodiment will be described.

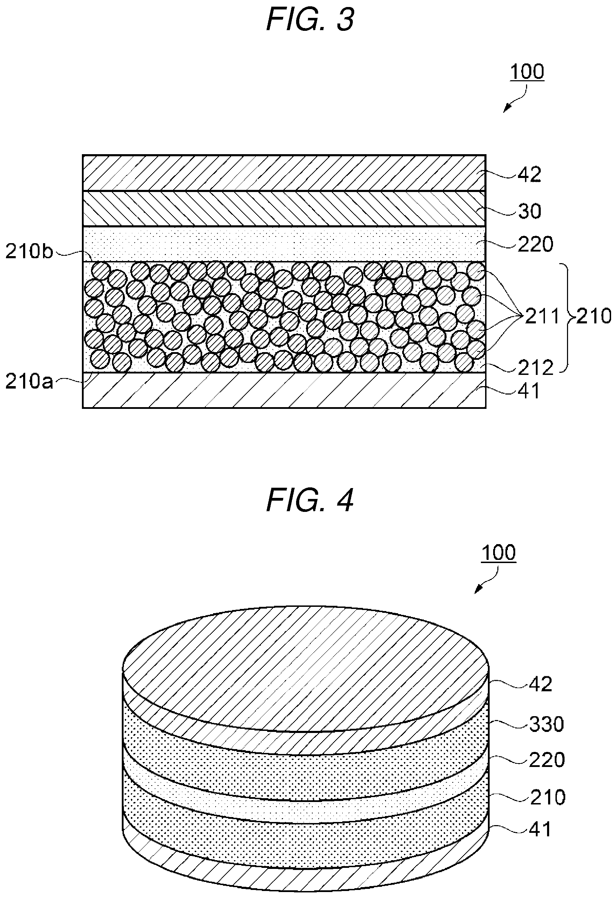

FIG. 2 is a schematic perspective view schematically showing a configuration of the lithium-ion secondary battery of the first embodiment, and FIG. 3 is a schematic cross-sectional view schematically showing a structure of the lithium-ion secondary battery of the first embodiment.

As shown in FIG. 2, a lithium-ion secondary battery 100 of this embodiment includes a positive electrode composite material 210, which functions as a positive electrode, and an electrolyte layer 220 and a negative electrode 30, which are sequentially stacked on the positive electrode composite material 210. The lithium-ion secondary battery further includes a current collector 41 in contact with the positive electrode composite material 210 at an opposite face side of the positive electrode composite material 210 from a face thereof facing the electrolyte layer 220, and includes a current collector 42 in contact with the negative electrode 30 at an opposite face side of the negative electrode 30 from a face thereof facing the electrolyte layer 220. The positive electrode composite material 210, the electrolyte layer 220, and the negative electrode 30 are all constituted by a solid phase, and therefore, the lithium-ion secondary battery 100 is a chargeable and dischargeable all solid-state battery.

The shape of the lithium-ion secondary battery 100 is not particularly limited, and may be, for example, a polygonal disk shape or the like, but is a circular disk shape in the configuration shown in the drawing. The size of the lithium-ion secondary battery 100 is not particularly limited, but for example, the diameter of the lithium-ion secondary battery 100 is, for example, 10 mm or more and 20 mm or less, and the thickness of the lithium-ion secondary battery 100 is, for example, 0.1 mm or more and 1.0 mm or less.

When the lithium-ion secondary battery 100 is small and thin in this manner, together with the fact that it is chargeable and dischargeable and is an all solid-state battery, it can be favorably used as a power supply of a portable information terminal such as a smartphone. The lithium-ion secondary battery 100 may be used for a purpose other than the power supply of a portable information terminal as described later.

Hereinafter, the respective configurations of the lithium-ion secondary battery 100 will be described.

### [4-1-1] Positive Electrode Composite Material

As shown in FIG. 3, the positive electrode composite material 210 in the lithium-ion secondary battery 100 includes a positive electrode active material 211 in a particulate shape and a solid electrolyte 212. In such a positive electrode composite material 210, the battery reaction rate in the lithium-ion secondary battery 100 can be further increased by increasing an interfacial area where the positive electrode active material 211 in a particulate shape and the solid electrolyte 212 are in contact with each other. Such a positive electrode composite material 210 is formed using the positive electrode active material composite particles according to the present disclosure described above. That is, the positive electrode active material 211 is mainly derived from the base particle P11 of the positive electrode active material composite particle P1, and the solid electrolyte 212 is mainly derived from the coating layer P12 of the positive electrode active material composite particle P1.

The average particle diameter of the positive electrode active material 211 is generally the same as the average particle diameter of the base particle P11 described above. Then, a preferred range of the average particle diameter of the positive electrode active material 211 is also generally the same as the preferred range of the average particle diameter of the base particle P11.

When the average particle diameter of the positive electrode active material 211 is a value within such a range, an actual capacity density close to the theoretical capacity of the positive electrode active material 211 and a high charge-discharge rate are easily achieved at the same time.

The particle size distribution of the positive electrode active material 211 is not particularly limited, and for example, in the particle size distribution having one peak, the half width of the peak can be set to 0.15 µm or more and 19 µm or less. Further, the particle size distribution of the positive electrode active material 211 may have two or more peaks.

In FIG. 3, the shape of the positive electrode active material 211 in a particulate shape is shown as a spherical shape, however, the shape of the positive electrode active material 211 is not limited to the spherical shape, and can have various shapes, for example, a columnar shape, a plate shape, a scaly shape, a hollow shape, an indefinite shape, and the like, and further, two or more types among these may be mixed.

When the content ratio of the positive electrode active material 211 in the positive electrode composite material 210 is represented by XA [mass%] and the content ratio of the solid electrolyte 212 in the positive electrode composite material 210 is represented by XS [mass%], it is preferred to satisfy a relationship: 0.1 ≤ XS/XA ≤ 8.3, it is more preferred to satisfy a relationship: 0.3 ≤ XS/XA ≤ 2.8, and it is further more preferred to satisfy a relationship: 0.6 ≤ XS/XA ≤ 1.4.

Further, the positive electrode composite material 210 may include an electric conduction assistant, a binder, or the like other than the positive electrode active material 211 and the solid electrolyte 212.

As the electric conduction assistant, any material may be used as long as it is an electric conductor whose electrochemical interaction can be ignored at a positive electrode reaction potential, and more specifically, for example, a carbon material such as acetylene black, Ketjen black, or a carbon nanotube, a noble metal such as palladium or platinum, an electric conductive oxide such as SnO₂, ZnO, RuO₂, ReO₃, or Ir₂O₃, or the like can be used.

The thickness of the positive electrode composite material 210 is not particularly limited, but is preferably 1.1 µm or more and 500 µm or less, more preferably 2.5 µm or more and 100 µm or less.

As a method for forming the positive electrode composite material 210, for example, a green sheet method, a press firing method, a cast firing method, or the like is exemplified. A specific example of the method for forming the positive electrode composite material 210 will be described in detail later. For the purpose of improvement of the adhesion between the positive electrode composite material 210 and the electrolyte layer 220, improvement of the output or battery capacity of the lithium-ion secondary battery 100 by an increase in specific surface area, or the like, for example, a three-dimensional pattern structure such as a dimple, trench, or pillar pattern may be formed at a surface of the positive electrode composite material 210 at a side in contact with the electrolyte layer 220.

### [4-1-2] Electrolyte Layer

The electrolyte layer 220 is preferably constituted by the same material or the same type of material as the solid electrolyte 212 from the viewpoint of an interfacial impedance between the electrolyte layer 220 and the positive electrode composite material 210, but may be constituted by a material different from the solid electrolyte 212. For example, the electrolyte layer 220 may be formed using particles constituted by the same material as the coating layer of the positive electrode active material composite particle according to the present disclosure described above. Further, the electrolyte layer 220 may be a crystalline material or an amorphous material of another oxide solid electrolyte, a sulfide solid electrolyte, a nitride solid electrolyte, a halide solid electrolyte, a hydride solid electrolyte, a dry polymer electrolyte, or a quasi-solid electrolyte, or may be constituted by a material in which two or more types selected from these are combined.

Examples of a crystalline oxide include Li_{0.35}La_{0.55}TiO₃, Li_{0.2}La_{0.27}NbO₃, and a perovskite-type crystal or a perovskite-like crystal in which the elements constituting a crystal thereof are partially substituted with N, F, Al, Sr, Sc, Nb, Ta, Sb, a lanthanoid element, or the like, Li₇La₃Zr₂O₁₂, Li₅La₃Nb₂O₁₂, Li₅BaLa₂TaO₁₂, and a garnet-type crystal or a garnet-like crystal in which the elements constituting a crystal thereof are partially substituted with N, F, Al, Sr, Sc, Nb, Ta, Sb, a lanthanoid element, or the like, Li_{1.3}Ti_{1.7}Al_{0.3}(PO₄)₃, Li_{1.4}Al_{0.4}Ti_{1.6}(PO₄)₃, Li_{1.4}Al_{0.4}Ti_{1.4}Ge_{0.2}(PO₄)₃, and a NASICON-type crystal in which the elements constituting a crystal thereof are partially substituted with N, F, Al, Sr, Sc, Nb, Ta, Sb, a lanthanoid element, or the like, a LISICON-type crystal such as Li₁₄ZnGe₄O₁₆, and other crystalline materials such as Li_{3.4}V_{6.6}Si_{6.4}O₄, Li_{3.6}V_{0.4}Ge_{0.6}O₄, and Li₂₊ₓC₁₋ₓBₓO₃.

Examples of a crystalline sulfide include Li₁₀GeP₂S₁₂, Li_{9.6}P₃S₁₂, Li_{9.54}Si_{1.74}P_{1.44}S_{11.7}Cl_{0.3}, and Li₃PS₄.

Examples of other amorphous materials include Li₂O-TiO₂, La₂O₃-Li₂O-TiO₂, LiNbO₃, LiSO₄, Li₄SiO₄, Li₃PO₄-Li₄SiO₄, Li₄GeO₄-Li₃VO₄, Li₄SiO₄-Li₃VO₄, Li₄GeO₄-Zn₂GeO₂, Li₄SiO₄-LiMoO₄, Li₄SiO₄-Li₄ZrO₄, SiO₂-P₂O₅-Li₂O, SiO₂-P₂O₅-LiCl, Li₂O-LiCl-B₂O₃, LiAlCl₄, LiAlF₄, LiF-Al₂O₃, LiBr-Al₂O₃, Li_{2.88}PO_{3.73}N_{0.14}, Li₃N-LiCl, Li₆NBr₃, Li₂S-SiS₂, and Li₂S-SiS₂-P₂S₅.

When the electrolyte layer 220 is constituted by a crystalline material, the crystalline material preferably has a crystal structure such as a cubic crystal having small crystal plane anisotropy in the direction of lithium ion conduction. Further, when the electrolyte layer 220 is constituted by an amorphous material, the anisotropy in lithium ion conduction becomes small. Therefore, the crystalline material and the amorphous material as described above are both preferred as a solid electrolyte constituting the electrolyte layer 220.

The thickness of the electrolyte layer 220 is preferably 0.1 µm or more and 100 µm or less, more preferably 0.2 µm or more and 10 µm or less. When the thickness of the electrolyte layer 220 is a value within the above range, the internal resistance of the electrolyte layer 220 can be further decreased, and also the occurrence of a short circuit between the positive electrode composite material 210 and the negative electrode 30 can be more effectively prevented.

For the purpose of improvement of the adhesion between the electrolyte layer 220 and the negative electrode 30, improvement of the output or battery capacity of the lithium-ion secondary battery 100 by an increase in specific surface area, or the like, for example, a three-dimensional pattern structure such as a dimple, trench, or pillar pattern may be formed at a surface of the electrolyte layer 220 at a side in contact with the negative electrode 30.

As a method for forming the electrolyte layer 220, for example, a vapor phase deposition method such as a vacuum vapor deposition method, a sputtering method, a CVD method, a PLD method, an ALD method, or an aerosol deposition method, a chemical deposition method using a solution such as a sol-gel method or an MOD method, or the like is exemplified. In that case, a heat treatment is performed after forming a film as needed, and the crystal phase of the constituent material of the formed film may be changed.

In addition, for example, fine particles of an electrolyte or a precursor of an electrolyte are formed into a slurry together with an appropriate binder, followed by squeegeeing or screen printing, thereby forming a coating film, and then, the coating film may be baked onto the surface of the electrolyte layer 220 by drying and firing. In that case, for example, as the precursor of the electrolyte, a material that satisfies the same conditions as the constituent material of the coating layer of the positive electrode active material composite particle according to the present disclosure described above can be used.

### [4-1-3] Negative Electrode

The negative electrode 30 may be any as long as it is constituted by a so-called negative electrode active material that repeats electrochemical occlusion and release of lithium ions at a lower potential than the positive electrode active material 211.

Specifically, examples of the negative electrode active material constituting the negative electrode 30 include Nb₂O₅, V₂O₅, TiO₂, In₂O₃, ZnO, SnO₂, NiO, ITO, AZO, GZO, ATO, FTO, and lithium multiple oxides such as Li₄Ti₅O₁₂ and Li₂Ti₃O₇. Further, additional examples thereof include metals and alloys such as Li, Al, Si, Si-Mn, Si-Co, Si-Ni, Sn, Zn, Sb, Bi, In, and Au, carbon materials, and materials obtained by intercalation of lithium ions between layers of a carbon material such as LiC₂₄ or LiC₆.

The negative electrode 30 is preferably formed as a thin film at one surface of the electrolyte layer 220 in consideration of an electric conduction property and an ion diffusion distance.

The thickness of the negative electrode 30 by the thin film is not particularly limited, but is preferably 0.1 µm or more and 500 µm or less, more preferably 0.3 µm or more and 100 µm or less.

As a method for forming the negative electrode 30, for example, a vapor phase deposition method such as a vacuum vapor deposition method, a sputtering method, a CVD method, a PLD method, an ALD method, or an aerosol deposition method, a chemical deposition method using a solution such as a sol-gel method or an MOD method, or the like is exemplified. In addition, for example, fine particles of the negative electrode active material are formed into a slurry together with an appropriate binder, followed by squeegeeing or screen printing, thereby forming a coating film, and then, the coating film may be baked onto the surface of the electrolyte layer 220 by drying and firing.

### [4-1-4] Current Collector

The current collectors 41 and 42 are electric conductors provided so as to play a role in transfer of electrons to or from the positive electrode composite material 210 or the negative electrode 30. As the current collector, generally, a current collector constituted by a material that has a sufficiently small electrical resistance, and that does not substantially change the electric conduction characteristics or the mechanical structure thereof by charging and discharging is used. Specifically, as the constituent material of the current collector 41 of the positive electrode composite material 210, for example, Al, Ti, Pt, Au, or the like is used. Further, as the constituent material of the current collector 42 of the negative electrode 30, for example, Cu or the like is favorably used.

The current collectors 41 and 42 are generally provided so that the contact resistance thereof with the positive electrode composite material 210 or the negative electrode 30 becomes small. Examples of the shape of the current collector 41 or 42 include a plate shape and a mesh shape.

The thickness of each of the current collectors 41 and 42 is not particularly limited, but is preferably 7 µm or more and 85 µm or less, more preferably 10 µm or more and 60 µm or less.

In the configuration shown in the drawing, the lithium-ion secondary battery 100 includes a pair of current collectors 41 and 42, however, for example, when a plurality of lithium-ion secondary batteries 100 are used by being stacked and electrically coupled to one another in series, the lithium-ion secondary battery 100 can also be configured to include only the current collector 41 of the current collectors 41 and 42.

The lithium-ion secondary battery 100 may be used for any purpose. Examples of an electronic device to which the lithium-ion secondary battery 100 is applied as a power supply include a personal computer, a digital camera, a cellular phone, a smartphone, a music player, a tablet terminal, a timepiece, a smartwatch, various types of printers such as an inkjet printer, a television, a projector, wearable terminals such as a head-up display, a wireless headphone, wireless earphones, smartglasses, and a head-mounted display, a video camera, a videotape recorder, a car navigation device, a drive recorder, a pager, an electronic notebook, an electronic dictionary, an electronic translation machine, an electronic calculator, an electronic gaming device, a toy, a word processor, a work station, a robot, a television telephone, a television monitor for crime prevention, electronic binoculars, a POS terminal, a medical device, a fish finder, various types of measurement devices, a device for mobile terminal base stations, various types of meters for vehicles, railroad cars, airplanes, helicopters, ships, or the like, a flight simulator, and a network server. Further, the lithium-ion secondary battery 100 may be applied to moving objects such as a car and a ship. More specifically, it can be favorably applied as, for example, a storage battery for electric cars, plug-in hybrid cars, hybrid cars, fuel cell cars, or the like. In addition, it can also be applied to, for example, a power supply for household use, a power supply for industrial use, a storage battery for photovoltaic power generation, or the like.

### [4-2] Lithium-Ion Secondary Battery of Second Embodiment

Hereinafter, a lithium-ion secondary battery according to a second embodiment will be described.

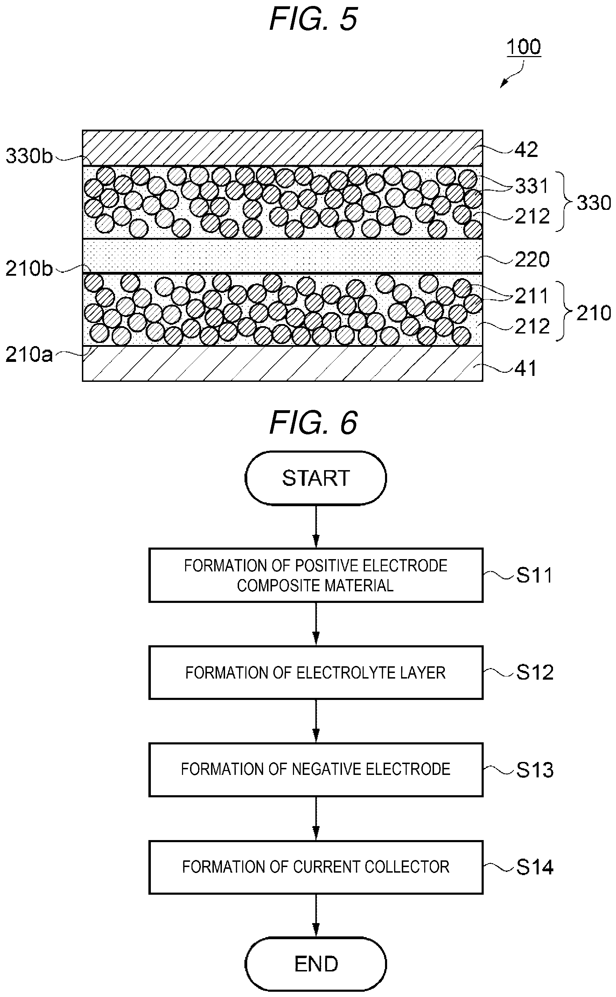

FIG. 4 is a schematic perspective view schematically showing a configuration of the lithium-ion secondary battery of the second embodiment, and FIG. 5 is a schematic cross-sectional view schematically showing a structure of the lithium-ion secondary battery of the second embodiment.

Hereinafter, the lithium-ion secondary battery according to the second embodiment will be described with reference to these drawings, but different points from the above-mentioned embodiment will be mainly described, and the description of the same matter will be omitted.

As shown in FIG. 4, a lithium-ion secondary battery 100 of this embodiment includes a positive electrode composite material 210, and an electrolyte layer 220 and a negative electrode composite material 330, which are sequentially stacked on the positive electrode composite material 210. The lithium-ion secondary battery further includes a current collector 41 in contact with the positive electrode composite material 210 at an opposite face side of the positive electrode composite material 210 from a face thereof facing the electrolyte layer 220, and includes a current collector 42 in contact with the negative electrode composite material 330 at an opposite face side of the negative electrode composite material 330 from a face thereof facing the electrolyte layer 220.

Hereinafter, the negative electrode composite material 330 that is different from the configuration of the lithium-ion secondary battery 100 according to the above-mentioned embodiment will be described.

### [4-2-1] Negative Electrode Composite Material

As shown in FIG. 5, the negative electrode composite material 330 in the lithium-ion secondary battery 100 of this embodiment includes a negative electrode active material 331 in a particulate shape and a solid electrolyte 212. In such a negative electrode composite material 330, the battery reaction rate in the lithium-ion secondary battery 100 can be further increased by increasing an interfacial area where the negative electrode active material 331 in a particulate shape and the solid electrolyte 212 are in contact with each other.

The average particle diameter of the negative electrode active material 331 is not particularly limited, but is preferably 0.1 µm or more and 150 µm or less, more preferably 0.3 µm or more and 60 µm or less.

According to this, an actual capacity density close to the theoretical capacity of the negative electrode active material 331 and a high charge-discharge rate are easily achieved at the same time.

The particle size distribution of the negative electrode active material 331 is not particularly limited, and for example, in the particle size distribution having one peak, the half width of the peak can be set to 0.1 µm or more and 18 µm or less. Further, the particle size distribution of the negative electrode active material 331 may have two or more peaks.

In FIG. 5, the shape of the negative electrode active material 331 in a particulate shape is shown as a spherical shape, however, the shape of the negative electrode active material 331 is not limited to the spherical shape, and can have various shapes, for example, a columnar shape, a plate shape, a scaly shape, a hollow shape, an indefinite shape, and the like, and further, two or more types among these may be mixed.

Examples of the negative electrode active material 331 include the same materials as exemplified as the constituent material of the negative electrode 30 in the above-mentioned first embodiment.

In this embodiment, the negative electrode composite material 330 includes the solid electrolyte 212 in addition to the negative electrode active material 331. The solid electrolyte 212 is present so as to fill up a gap between particles of the negative electrode active material 331 or so as to be in contact with, particularly adhere to the surface of the negative electrode active material 331.

According to this, the ion conductivity in the solid electrolyte 212 becomes particularly excellent. Further, the adhesion of the solid electrolyte 212 to the negative electrode active material 331 or the electrolyte layer 220 can be made excellent. Accordingly, the characteristics and reliability of the lithium-ion secondary battery 100 as a whole can be made particularly excellent.

When the content ratio of the negative electrode active material 331 in the negative electrode composite material 330 is represented by XB [mass%] and the content ratio of the solid electrolyte 212 in the negative electrode composite material 330 is represented by XS [mass%], it is preferred to satisfy a relationship: 0.14 ≤ XS/XB ≤ 26, it is more preferred to satisfy a relationship: 0.44 ≤ XS/XB ≤ 4.1, and it is further more preferred to satisfy a relationship: 0.89 ≤ XS/XB ≤ 2.1.

Further, the negative electrode composite material 330 may include an electric conduction assistant, a binder, or the like other than the negative electrode active material 331 and the solid electrolyte 212.

As the electric conduction assistant, any material may be used as long as it is an electric conductor whose electrochemical interaction can be ignored at a positive electrode reaction potential, and more specifically, for example, a carbon material such as acetylene black, Ketjen black, or a carbon nanotube, a noble metal such as palladium or platinum, an electric conductive oxide such as SnO₂, ZnO, RuO₂, ReO₃, or Ir₂O₃, or the like can be used.

The thickness of the negative electrode composite material 330 is not particularly limited, but is preferably 0.1 µm or more and 500 µm or less, more preferably 0.3 µm or more and 100 µm or less.

In the first and second embodiments, another layer may be provided between respective layers or at a surface of a layer constituting the lithium-ion secondary battery 100. Examples of such a layer include an adhesive layer, an insulating layer, and a protective layer.

### [5] Production Method for Lithium-Ion Secondary Battery

Next, a production method for the above-mentioned lithium-ion secondary battery will be described.

In the production method for a lithium-ion secondary battery according to the present disclosure, for example, the production method for a positive electrode composite material described above can be applied using the positive electrode active material composite particles according to the present disclosure as described above.

### [5-1] Production Method for Lithium-Ion Secondary Battery of First Embodiment

Hereinafter, a production method for a lithium-ion secondary battery according to a first embodiment will be described.

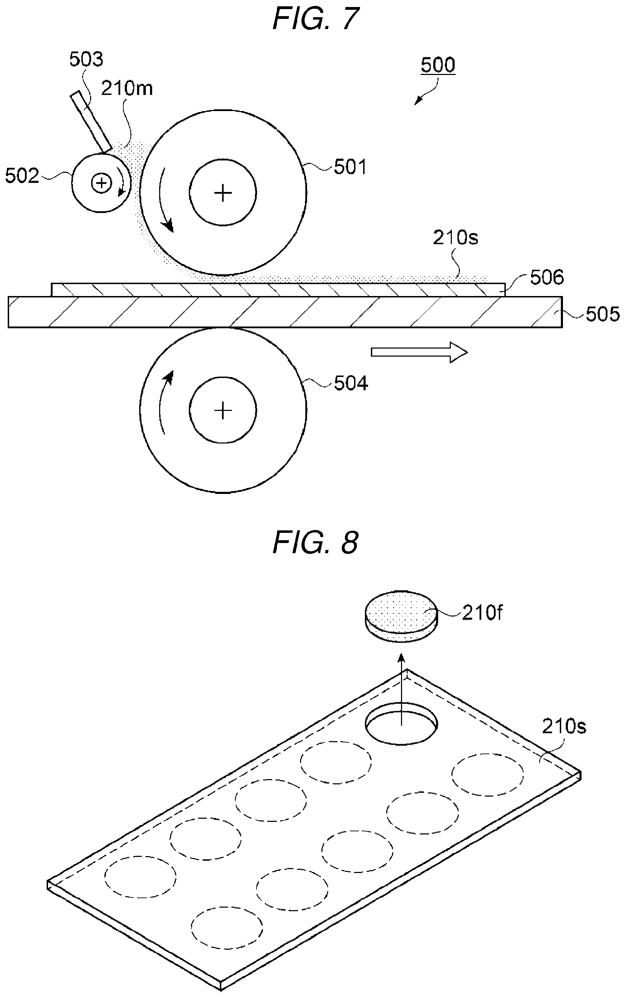

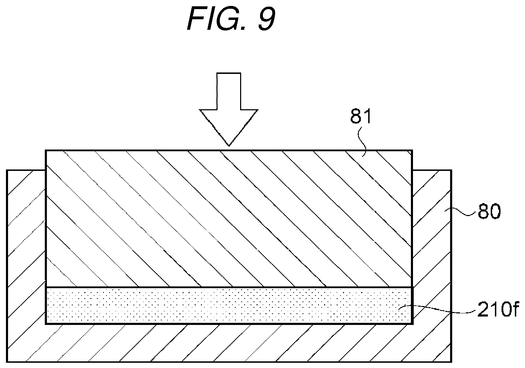

FIG. 6 is a flowchart showing the production method for a lithium-ion secondary battery of the first embodiment, FIGS. 7 and 8 are schematic views schematically showing the production method for a lithium-ion secondary battery of the first embodiment, and FIG. 9 is a schematic cross-sectional view schematically showing another method for forming a positive electrode composite material.

As shown in FIG. 6, the production method for the lithium-ion secondary battery 100 of this embodiment includes Step S11, Step S12, Step S13, and Step S14.

Step S11 is a step of forming the positive electrode composite material 210. Step S12 is a step of forming the electrolyte layer 220. Step S13 is a step of forming the negative electrode 30. Step S14 is a step of forming the current collectors 41 and 42.

### [5-1-1] Step S11

In the step of forming the positive electrode composite material 210 of Step S11, by using the positive electrode active material composite particles according to the present disclosure, the positive electrode composite material 210 is formed by, for example, a green sheet method. More specifically, the positive electrode composite material 210 can be formed as follows.

That is, first, for example, a solution in which a binder such as polypropylene carbonate is dissolved in a solvent such as 1,4-dioxane is prepared, and the solution and the positive electrode active material composite particles according to the present disclosure are mixed, whereby a slurry 210m is obtained. In the preparation of the slurry 210m, a dispersant, a diluent, a humectant, or the like may be further used as needed.

Subsequently, by using the slurry 210m, a positive electrode composite material forming sheet 210s is formed. More specifically, as shown in FIG. 7, for example, by using a fully automatic film applicator 500, the slurry 210m is applied to a predetermined thickness onto a base material 506 such as a polyethylene terephthalate film, whereby the positive electrode composite material forming sheet 210s is formed. The fully automatic film applicator 500 includes an application roller 501 and a doctor roller 502. A squeegee 503 is provided so as to come in contact with the doctor roller 502 from above. A conveyance roller 504 is provided below the application roller 501 at a position opposite thereto, and a stage 505 on which the base material 506 is placed is conveyed in a fixed direction by inserting the stage 505 between the application roller 501 and the conveyance roller 504. The slurry 210m is fed at a side where the squeegee 503 is provided between the application roller 501 and the doctor roller 502 disposed with a gap therebetween in the conveyance direction of the stage 505. The slurry 210m with a predetermined thickness is applied to the surface of the application roller 501 by rotating the application roller 501 and the doctor roller 502 so as to extrude the slurry 210m downward from the gap. Then, along with this, by rotating the conveyance roller 504, the stage 505 is conveyed so that the base material 506 comes in contact with the application roller 501 to which the slurry 210m has been applied. By doing this, the slurry 210m applied to the application roller 501 is transferred in a sheet form to the base material 506, whereby the positive electrode composite material forming sheet 210s is formed.

Thereafter, the solvent is removed from the positive electrode composite material forming sheet 210s formed on the base material 506, and the positive electrode composite material forming sheet 210s is detached from the base material 506 and punched to a predetermined size using a punching die as shown in FIG. 8, whereby a molded material 210f is formed. This treatment corresponds to the molding step in the production method for a positive electrode composite material described above.

Thereafter, a heating step of heating the molded material 210f is performed, whereby the positive electrode composite material 210 including the positive electrode active material 211 and the solid electrolyte 212 is obtained. This treatment corresponds to the heat treatment step in the production method for a positive electrode composite material described above. Therefore, this treatment is preferably performed under the same conditions as described in the above [3-2] Heat Treatment Step. According to this, the same effect as described above is obtained.

The positive electrode composite material forming sheet 210s with a predetermined thickness may be formed by pressing and extruding the slurry 210m by the application roller 501 and the doctor roller 502 so that the sintered density of the positive electrode composite material 210 after firing becomes 90% or more.

### [5-1-2] Step S12

After Step S11, the process proceeds to Step S12.

In the step of forming the electrolyte layer 220 of Step S12, the electrolyte layer 220 is formed at one face 210b of the positive electrode composite material 210. More specifically, for example, by using a sputtering device, sputtering is performed using LiCoO₂ as a target in an inert gas such as argon gas, whereby a LiCoO₂ layer is formed at a surface of the positive electrode composite material 210. Thereafter, the LiCoO₂ layer formed on the positive electrode composite material 210 is fired in an oxidizing atmosphere so as to convert the crystal of the LiCoO₂ layer into a high-temperature phase crystal, whereby the LiCoO₂ layer can be converted into the electrolyte layer 220. The firing conditions for the LiCoO₂ layer are not particularly limited, but the heating temperature can be set to 400°C or higher and 600°C or lower, and the heating time can be set to 1 hour or more and 3 hours or less.

### [5-1-3] Step S13

After Step S12, the process proceeds to Step S13.

In the step of forming the negative electrode 30 of Step S13, the negative electrode 30 is formed at an opposite face side of the electrolyte layer 220 from a face thereof facing the positive electrode composite material 210. More specifically, the negative electrode 30 can be formed by forming a thin film of metal Li at an opposite face side of the electrolyte layer 220 from a face thereof facing the positive electrode composite material 210 using, for example, a vacuum deposition device or the like.

### [5-1-4] Step S14

After Step S13, the process proceeds to Step S14.

In the step of forming the current collectors 41 and 42 of Step S14, the current collector 41 is formed so as to come in contact with the other face of the positive electrode composite material 210, that is, a face 210a at an opposite side to the face 210b at which the electrolyte layer 220 is formed, and the current collector 42 is formed so as to come in contact with the negative electrode 30. More specifically, for example, an aluminum foil formed into a circular shape by punching or the like is joined to the positive electrode composite material 210 by pressing, whereby the current collector 41 can be formed. Further, for example, a copper foil formed into a circular shape by punching or the like is joined to the negative electrode 30 by pressing, whereby the current collector 42 can be formed. The thickness of each of the current collectors 41 and 42 is not particularly limited, but can be set to, for example, 10 µm or more and 60 µm or less. In this step, only one of the current collectors 41 and 42 may be formed.

The method for forming the positive electrode composite material 210 is not limited to the green sheet method shown in Step S11. As another method for forming the positive electrode composite material 210, for example, a method as described below can be adopted. That is, as shown in FIG. 9, the molded material 210f may be obtained by filling the positive electrode active material composite particles according to the present disclosure in a pellet die 80, closing the pellet die using a lid 81, and pressing the lid 81 to perform uniaxial press molding. A treatment for the molded material 210f thereafter can be performed in the same manner as described above. As the pellet die 80, a die including an exhaust port (not shown) can be favorably used.

### [5-2] Production Method for Lithium-Ion Secondary Battery of Second Embodiment

Next, a production method for a lithium-ion secondary battery according to a second embodiment will be described.

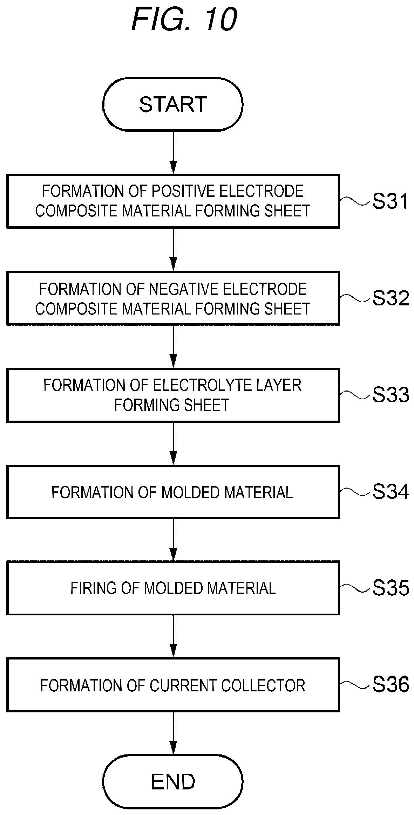

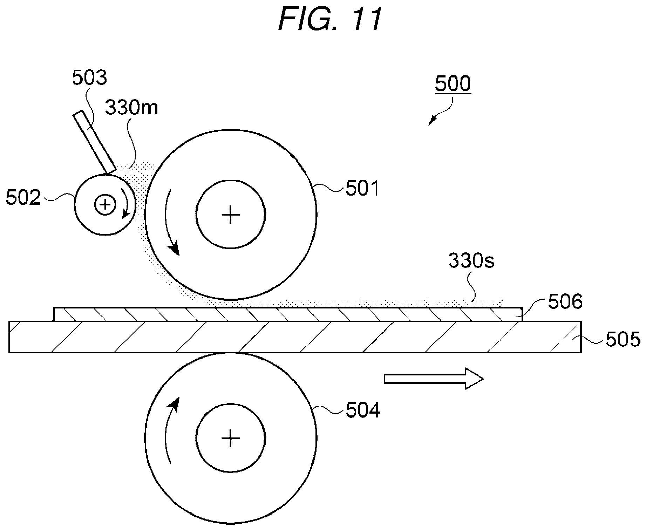

FIG. 10 is a flowchart showing the production method for a lithium-ion secondary battery of the second embodiment, and FIGS. 11, 12, and 13 are schematic views schematically showing the production method for a lithium-ion secondary battery of the second embodiment.

Hereinafter, the production method for a lithium-ion secondary battery according to the second embodiment will be described with reference to these drawings, but different points from the above-mentioned embodiment will be mainly described, and the description of the same matter will be omitted.

As shown in FIG. 10, the production method for the lithium-ion secondary battery 100 of this embodiment includes Step S31, Step S32, Step S33, Step S34, Step S35, and Step S36.

Step S31 is a step of forming a sheet for forming the positive electrode composite material 210. Step S32 is a step of forming a sheet for forming the negative electrode composite material 330. Step S33 is a step of forming a sheet for forming the electrolyte layer 220. Step S34 is a step of forming a molded material 450f of molding a stacked body of the sheet for forming the positive electrode composite material 210, the sheet for forming the negative electrode composite material 330, and the sheet for forming the electrolyte layer 220 into a predetermined shape. Step S35 is a step of firing the molded material 450f. Step S36 is a step of forming the current collectors 41 and 42.

In the following description, a description will be given by assuming that Step S32 is performed after Step S31, and Step S33 is performed after Step S32, however, the order of Step S31, Step S32, and Step S33 is not limited thereto, and the order of the steps may be changed, or the steps may be concurrently performed.

### [5-2-1] Step S31

In the step of forming a sheet for forming the positive electrode composite material 210 of Step S31, the positive electrode composite material forming sheet 210s that is the sheet for forming the positive electrode composite material 210 is formed.

The positive electrode composite material forming sheet 210s can be formed by, for example, the same method as described in the above-mentioned first embodiment.

The positive electrode composite material forming sheet 210s obtained in this step is preferably one obtained by removing the solvent from the slurry 210m used for forming the positive electrode composite material forming sheet 210s.

### [5-2-2] Step S32

After Step S31, the process proceeds to Step S32.

In the step of forming a sheet for forming the negative electrode composite material 330 of Step S32, a negative electrode composite material forming sheet 330s that is the sheet for forming the negative electrode composite material 330 is formed using a slurry 330m.

More specifically, as shown in FIG. 11, for example, by using the fully automatic film applicator 500, the slurry 330m is applied to a predetermined thickness onto the base material 506 such as a polyethylene terephthalate film, whereby the negative electrode composite material forming sheet 330s is formed.

Thereafter, the solvent is removed from the negative electrode composite material forming sheet 330s formed on the base material 506, and the negative electrode composite material forming sheet 330s is detached from the base material 506.

As the slurry 330m, for example, a composition containing a binder such as polypropylene carbonate, a solvent such as 1,4-dioxane, negative electrode active material particles, and fine particles of an electrolyte or a precursor of an electrolyte can be used. As the fine particles of a precursor of an electrolyte, for example, fine particles constituted by a material that satisfies the same conditions as the constituent material of the coating layer of the positive electrode active material composite particle according to the present disclosure described above can be used. The slurry 330m may further contain a dispersant, a diluent, a humectant, or the like as needed.

### [5-2-3] Step S33

After Step S32, the process proceeds to Step S33.

In the step of forming a sheet for forming the electrolyte layer 220 of Step S33, an electrolyte layer forming sheet 220s that is the sheet for forming the electrolyte layer 220 is formed.

In the step of forming a sheet for forming the electrolyte layer 220, the electrolyte layer forming sheet 220s that is the sheet for forming the electrolyte layer 220 is formed using a slurry 220m.

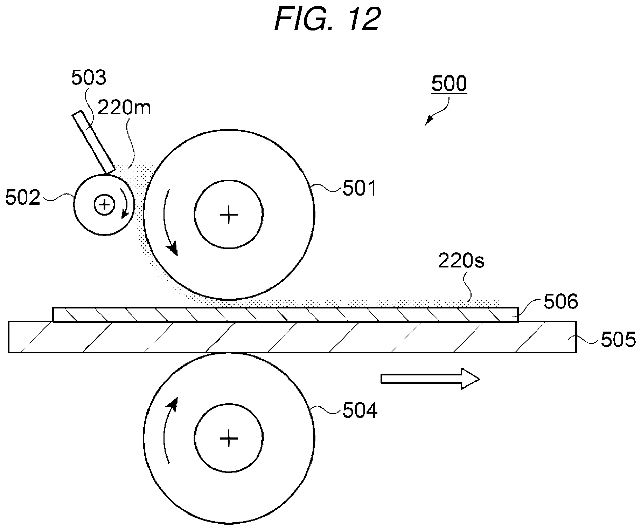

More specifically, as shown in FIG. 12, for example, by using the fully automatic film applicator 500, the slurry 220m is applied to a predetermined thickness onto the base material 506 such as a polyethylene terephthalate film, whereby the electrolyte layer forming sheet 220s is formed.

As the slurry 220m, for example, a composition containing a binder such as polypropylene carbonate, a solvent such as 1,4-dioxane, and fine particles of an electrolyte or a precursor of an electrolyte can be used. As the fine particles of a precursor of an electrolyte, for example, fine particles constituted by a material that satisfies the same conditions as the constituent material of the coating layer of the positive electrode active material composite particle according to the present disclosure described above can be used. The slurry 220m may further contain a dispersant, a diluent, a humectant, or the like as needed.

Thereafter, the solvent is removed from the electrolyte layer forming sheet 220s formed on the base material 506, and the electrolyte layer forming sheet 220s is detached from the base material 506.

### [5-2-4] Step S34

After Step S33, the process proceeds to Step S34.

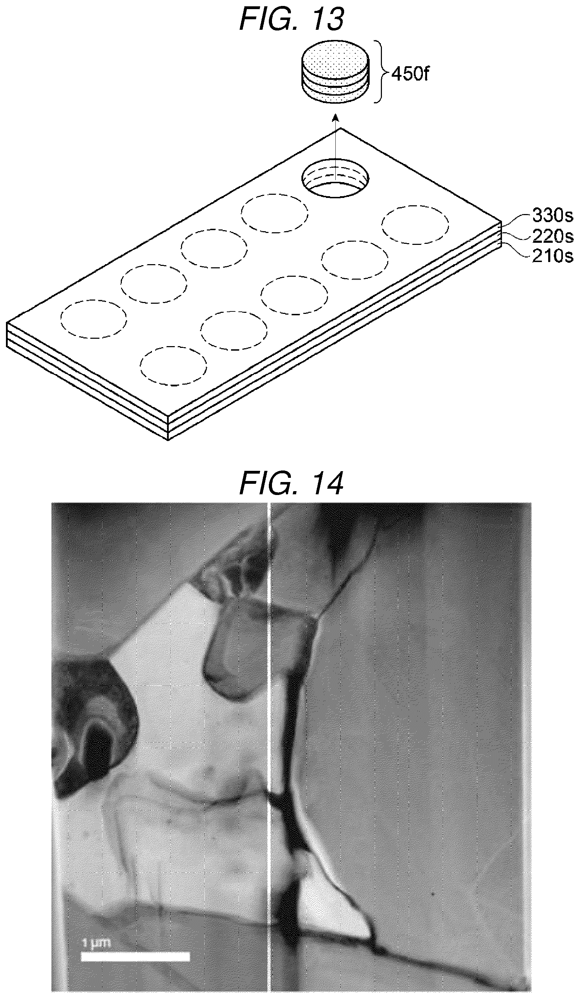

In the step of forming the molded material 450f of Step S34, the positive electrode composite material forming sheet 210s, the electrolyte layer forming sheet 220s, and the negative electrode composite material forming sheet 330s are pressed in a state of being stacked in this order and bonded to one another. Thereafter, as shown in FIG. 13, a stacked sheet obtained by bonding the sheets to one another is punched, whereby the molded material 450f is obtained. This treatment corresponds to the molding step in the production method for a positive electrode composite material described above.

### [5-2-5] Step S35

After Step S34, the process proceeds to Step S35.

In the step of firing the molded material 450f of Step S35, by performing a heating step of heating the molded material 450f, a portion constituted by the positive electrode composite material forming sheet 210s is converted into the positive electrode composite material 210, a portion constituted by the electrolyte layer forming sheet 220s is converted into the electrolyte layer 220, and a portion constituted by the negative electrode composite material forming sheet 330s is converted into the negative electrode composite material 330. That is, a fired body of the molded material 450f is a stacked body of the positive electrode composite material 210, the electrolyte layer 220, and the negative electrode composite material 330. This treatment corresponds to the heat treatment step in the production method for a positive electrode composite material described above. Therefore, this treatment is preferably performed under the same conditions as described in the above [3-2] Heat Treatment Step. According to this, the same effect as described above is obtained.

### [5-2-6] Step S36

After Step S35, the process proceeds to Step S36.

In the step of forming the current collectors 41 and 42 of Step S36, the current collector 41 is formed so as to come in contact with the face 210a of the positive electrode composite material 210, and the current collector 42 is formed so as to come in contact with a face 330b of the negative electrode composite material 330.

Hereinabove, preferred embodiments of the present disclosure have been described, however, the present disclosure is not limited thereto.

For example, the positive electrode active material composite particle according to the present disclosure is not limited to one produced by the above-mentioned method.

Further, when the present disclosure is applied to a lithium-ion secondary battery, the configuration of the lithium-ion secondary battery is not limited to those of the above-mentioned embodiments.

Further, when the present disclosure is applied to a lithium-ion secondary battery, the production method therefor is not limited to those of the above-mentioned embodiments. For example, the order of the steps in the production of the lithium-ion secondary battery may be different from the above-mentioned embodiments.

### Examples

Next, specific Examples of the present disclosure will be described.

### [6] Production of Powder

### Example 1

First, a first solution containing lanthanum nitrate hexahydrate as a lanthanum source, zirconium tetrabutoxide as a zirconium source, antimony tri-n-butoxide as an antimony source, tantalum pentaethoxide as a tantalum source, and 2-n-butoxyethanol as a solvent at a predetermined ratio was prepared, and a second solution containing lithium nitrate as a lithium compound and 2-n-butoxyethanol as a solvent at a predetermined ratio was prepared.

Subsequently, the first solution and the second solution were mixed at a predetermined ratio, whereby a mixed liquid in which the content ratio of Li, La, Zr, Ta, and Sb is 6.3:3:1.3:0.5:0.2 in molar ratio was obtained.

Subsequently, 500 parts by mass of the above mixed liquid was added to 100 parts by mass of LiCoO₂ particles that are a lithium composite oxide having a layered crystal structure as a positive electrode active material, and ultrasonic dispersion was performed for 2 hours at 55°C under the conditions of an oscillation frequency of 38 kHz and an output of 80 W using an ultrasonic cleaner with a temperature control function US-1 manufactured by AS ONE Corporation. As the LiCoO₂ particles, LiCoO₂ particles having an average particle diameter of 7 µm were used.

Thereafter, centrifugation was performed at 10000 rpm for 3 minutes using a centrifuge, the supernatant was removed, the resulting precipitate was placed in a dish, and then, a drying treatment was performed in an Ar atmosphere at 180°C for 60 minutes, whereby the liquid component was evaporated. Thereafter, a heating treatment was performed in an Ar atmosphere at 540°C for 60 minutes so as to calcine the solid component in the mixed liquid adhered to the surface of the positive electrode active material, whereby a coating film containing a multiple oxide was formed.

Thereafter, for the powder obtained by the calcination, treatments of mixing with the mixed liquid, ultrasonic dispersion, centrifugation, drying, and calcination were repeatedly performed predetermined times in the same manner as described above, whereby a powder that is an assembly of positive electrode active material composite particles including base particles constituted by LiCoO₂ that is a positive electrode active material, and a coating layer provided at surfaces thereof was obtained. The coating layer was constituted by a material containing a precursor oxide that is a multiple oxide different from LiCoO₂ and is constituted by a pyrochlore-type crystal phase, and LiCO₃, and LiNO₃.

### Examples 2 to 9

Powders constituted by a plurality of positive electrode active material composite particles were produced in the same manner as in the above-mentioned Example 1 except that the composition of the mixed liquid was changed as shown in Tables 1 and 2 by adjusting the types and the used amounts of raw materials to be used for preparing the mixed liquid, and also the number of repetitions of the series of treatments of mixing of the positive electrode active material with the mixed liquid, ultrasonic dispersion, centrifugation, drying, and calcination was adjusted.

### Comparative Example 1

The coating layer was not formed for the particles of the positive electrode active material used in the above-mentioned Example 1, and the particles were used as such. In other words, in this Comparative Example, a powder including a plurality of positive electrode active materials that were not coated with the coating layer was prepared in place of the positive electrode active material composite particles.

### Comparative Example 2

For the positive electrode active material composite particles obtained in the above-mentioned Example 1, a heat treatment at 900°C in an air atmosphere was performed, whereby the coating layer was converted into a solid electrolyte that has a garnet-type crystal phase and does not contain an oxoacid compound. An assembly of positive electrode active material composite particles in which a coating layer constituted by the solid electrolyte that does not contain an oxoacid compound was provided at the surfaces of the base particles constituted by a positive electrode active material was used as a powder of this Comparative Example.

### Comparative Example 3

A powder of this Comparative Example was obtained by mixing particles of a positive electrode active material that are not coated with a coating layer prepared in the same manner as in the above-mentioned Comparative Example 1 and particles of a solid electrolyte represented by Li_{6.3}La₃Zr_{1.3}Sb_{0.5}Ta_{0.2}O₁₂.

A sample of the positive electrode active material composite particle according to each of the respective Examples was processed into a flake shape using an FIB section processing device Helios 600 manufactured by FEI, Inc., and an element distribution and a composition were examined by various analytical methods. Based on the results of transmission electron microscopic observation and selected area electron diffraction using JEM-ARM 200F manufactured by JEOL Ltd., it was confirmed that the coating layer of the positive electrode active material composite particle is constituted by an amorphous region with a relatively large size of about several hundred nanometers or more, and a region of an assembly composed of nanocrystals with a size of 30 nm or less. Further, based on energy dispersive X-ray spectroscopy using a detector JED-2300T manufactured by JEOL Ltd. and energy loss spectroscopy, from the amorphous region of the coating layer of the positive electrode active material composite particle according to each of the respective Examples, lithium, carbon, and oxygen were detected, and from the region of the assembly composed of nanocrystals, lanthanum, zirconium, and the element M were detected.

The composition of the mixed liquid used in the production of the powders of the respective Examples and the respective Comparative Examples, and the production conditions for the powders are collectively shown in Tables 1, 2, and 3, and the conditions for the constituent particles of the powders of the respective Examples and the respective Comparative Examples are collectively shown in Table 4. Further, in Table 4, with respect to Comparative Example 3, in each of the columns for the base particles, the conditions for the positive electrode active material particles in which a coating layer was not formed, and the solid electrolyte particles are shown. Further, in Table 4, the value of XO/XP, the value of XL/XP, and the value of XO/XL when the content ratio of the oxoacid compound in the coating layer is represented by XO [mass%], the content ratio of the precursor oxide in the coating layer is represented by XP [mass%], and the content ratio of the lithium compound in the coating layer is represented by XL [mass%] are also shown. Further, when backscattered electron images were obtained by measurement using a field emission surface scanning electron microscope XL30 (manufactured by Philips Electron Optics) for the constituent particles of the powders of the respective Examples and Comparative Example 2, it was confirmed that the coating layer was formed at surfaces of the base particles constituted by the positive electrode active material in all cases. Further, when measurement was performed by TG-DTA at a temperature raising rate of 10°C/min for the coating layers of the particles constituting the powders of the respective Examples, only one exothermic peak was observed in a range of 300°C or higher and 1,000°C or lower in all cases. From the results, it can be said that the coating layers of the particles constituting the powders of the respective Examples are constituted by a substantially single crystal phase. Further, in the respective Examples and the respective Comparative Examples, the positive electrode active materials all had a layered crystal structure. Further, in all the powders of the respective Examples, the content ratio of components other than the positive electrode active material in the base particles was 0.1 mass% or less, the content ratio of components other than the multiple oxide different from the positive electrode active material, the lithium compound, and the oxoacid compound in the coating layer was 0.1 mass% or less, and the constituent particles of the powder were constituted by the base particles and the coating layer, and did not include a component other than the base particles and the coating layer. Further, the content ratio of components other than the positive electrode active material composite particles in the powders of the respective Examples, that is, the content ratio of components other than the constituent particles including the base particles and the coating layer was 5 mass% or less in all cases. Further, in the positive electrode active material composite particles constituting the powders of the respective Examples, the coating ratio of the coating layer with respect to the outer surface of the base particle was 10% or more in all cases. In the respective Examples, the precursor oxide constituting the coating layer of the positive electrode active material composite particles had a pyrochlore-type crystal in all cases. Further, in the respective Examples, the crystal grain diameter of the precursor oxide contained in the coating layer of the positive electrode active material composite particles was 20 nm or more and 160 nm or less in all cases.

**Table 1**

| | Composition of mixed liquid | | | | Positive electrode active material | | Presence or absence of heat treatment at 900°C or higher | Constituent particles of powder |
|---|---|---|---|---|---|---|---|---|
| | Raw material compound | | Solvent | | Composition | Particle diameter [µm] | | |
| | Type | Content [parts by mass] | Type | Content [parts by mass] | | | | |
| Example 1 | zirconium tetrabutoxide | 5.87 | 2-n-butoxyethanol | 304 | LiCoO₂ | 7 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Example 2 | zirconium tetrabutoxide | 7.90 | 2-n-butoxyethanol | 246 | LiCoO₂ | 7 | absence | coated particles |
| | niobium pentaethoxide | 0.80 | | | | | | |
| | lithium nitrate | 4.65 | | | | | | |
| | lanthanum nitrate hexahydrate | 12.99 | | | | | | |
| Example 3 | zirconium tetrabutoxide | 5.87 | 2-n-butoxyethanol | 304 | LiCoO₂ | 7 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Example 4 | zirconium tetrabutoxide | 5.87 | 2-n-butoxyethanol | 304 | LiCoO₂ | 7 | absence | coated particles |
| | antimony tributoxide | 1.71 | | | | | | |
| | tantalum pentaethoxide | 0.81 | | | | | | |
| | lithium sulfate | 4.13 | | | | | | |
| | lanthanum sulfate hexahydrate | 13.30 | | | | | | |

**Table 2**

| | Composition of mixed liquid | | | | Positive electrode active material | | Presence or absence of heat treatment at 900°C or higher | Constituent particles of powder |
|---|---|---|---|---|---|---|---|---|
| | Raw material compound | | Solvent | | Composition | Particle diameter [µm] | | |
| | Type | Content [parts by mass] | Type | Content [parts by mass] | | | | |
| Example 5 | zirconium tetrabutoxide | 5.87 | 2-n-butoxyethanol | 304 | LiCoO₂ | 7 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Example 6 | zirconium tetrabutoxide | 5.87 | 2-n-butoxyethanol | 304 | LiCoO₂ | 7 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Example 7 | zirconium tetrabutoxide | 5.87 | 2-n-butoxyethanol | 304 | LiCoO₂ | 15 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Example 8 | zirconium tetrabutoxide | 5.87 | 2-n-butoxyethanol | 304 | LiCoO₂ | 15 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |

**Table 3**

| | Composition of mixed liquid | | | | Positive electrode active material | | Presence or absence of heat treatment at 900°C or higher | Constituent particles of powder |
|---|---|---|---|---|---|---|---|---|
| | Raw material compound | | Solvent | | Composition | Particle diameter [µm] | | |
| | Type | Content [parts by mass] | Type | Content [parts by mass] | | | | |
| Example 9 | zirconium tetrabutoxide | 5.87 | 2-n-butoxyethanol | 304 | LiCoO₂ | 15 | absence | coated particles |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Comparative Example 1 | - | - | - | - | LiCoO₂ | 7 | absence | positive electrode active material particles |
| Comparative Example 2 | zirconium tetrabutoxide | 5.87 | 2-n-butoxyethanol | 304 | LiCoO₂ | 7 | Presence | coated particles (not containing oxoacid compound) |
| | antimony tributoxide | 1.71 | | | | | | |
| | tantalum pentaethoxide | 0.81 | | | | | | |
| | lithium nitrate | 4.34 | | | | | | |
| | lanthanum nitrate hexahydrate | 12.99 | | | | | | |
| Comparative Example 3 | - | - | - | - | LiCoO₂ | 7 | absence | positive electrode active material particles solid electrolyte particles |

**Table 4**

| | Base particles | | Coating layer | | | | | | | | XO/XP | XL/XP | XO/XL |
|---|---|---|---|---|---|---|---|---|---|---|---|---|---|
| | Composition | Average particle diameter [µm] | Precursor oxide | | | Lithium compound | | Oxoacid compound | | Thickness [µm] | | | |
| | | | Crystal phase | Crystal grain diameter [nm] | Content ratio XP [mass%] | Composition | Content ratio XL [mass%] | Composition | Content ratio XO [mass%] | | | | |
| Example 1 | LiCoO₂ | 7 | pyrochlore-type | 40 | 55.8 | Li₂CoO₃ | 16.2 | LiNO₃ | 2.68 | 0.20 | 0.0480 | 0.29 | 0.16 |
| Example 2 | LiCoO₂ | 7 | pyrochlore-type | 40 | 56.0 | Li₂CoO₃ | 16.2 | LiNO₃ | 2.69 | 0.20 | 0.0480 | 0.29 | 0.16 |
| Example 3 | LiCoO₂ | 7 | pyrochlore-type | 40 | 55.7 | Li₂CoO₃ | 16.2 | LiNO₃ | 2.67 | 0.20 | 0.0480 | 0.29 | 0.16 |
| Example 4 | LiCoO₂ | 7 | pyrochlore-type | 40 | 55.7 | Li₂CoO₃ | 16.2 | Li₂SO₄ | 2.72 | 0.20 | 0.0490 | 0.29 | 0.17 |
| Example 5 | LiCoO₂ | 7 | pyrochlore-type | 40 | 55.7 | Li₂CoO₃ | 16.2 | LiNO₃ | 2.67 | 0.12 | 0.0480 | 0.29 | 0.16 |
| Example 6 | LiCoO₂ | 7 | pyrochlore-type | 40 | 55.7 | Li₂CoO₃ | 16.2 | LiNO₃ | 2.67 | 0.38 | 0.0480 | 0.29 | 0.16 |
| Example 7 | LiCoO₂ | 15 | pyrochlore-type | 40 | 55.7 | Li₂CoO₃ | 16.2 | LiNO₃ | 2.67 | 0.19 | 0.0480 | 0.29 | 0.16 |
| Example 8 | LiCoO₂ | 15 | pyrochlore-type | 40 | 55.7 | Li₂CoO₃ | 16.2 | LiNO₃ | 2.67 | 0.37 | 0.0480 | 0.29 | 0.16 |
| Example 9 | LiCoO₂ | 15 | pyrochlore-type | 40 | 55.6 | Li₂CoO₃ | 16.2 | LiNO₃ | 2.67 | 0.12 | 0.0480 | 0.29 | 0.16 |
| Comparative Example 1 | LiCoO₂ | 7 | - | - | - | - | - | - | - | - | - | - | - |
| Comparative Example 2 | LiCoO₂ | 7 | Garnet-type | 40 | 100 | - | 0 | - | 0 | 0.20 | - | - | - |
| Comparative Example 3 | LiCoO₂ | 7 | - | - | - | - | - | - | - | - | - | - | - |
| | Li_{6.3}La₃Zr_{1.3}Sb_{0.5}Ta_{0.2}O₁₂ | 1 | | | | | | | | | | | |

### [7] Evaluation

The following evaluation was performed for the respective Examples and the respective Comparative Examples.

### [7-1] Production of Positive Electrode Composite Material for Evaluation

With respect to each of the powders finally obtained in the respective Examples and the respective Comparative Examples, 1 g of a sample was taken out.

Subsequently, each sample thereof was filled in a pellet die with an exhaust port having an inner diameter of 13 mm manufactured by Specac, Inc., followed by press molding under a load of 6 kN, thereby forming a pellet as a molded material. The obtained pellet was placed in a crucible made of alumina, and fired in an air atmosphere at 900°C for 8 hours, whereby a positive electrode composite material as a fired body was obtained. In all the thus obtained positive electrode composite materials, the content ratio of the liquid component was 0.1 mass% or less, and the content ratio of the oxoacid compound was 10 ppm or less. Further, in the respective Examples, the solid electrolytes produced from the constituent material of the coating layer all had a cubic garnet-type crystal phase.

### [7-2] Evaluation of Internal Resistance

With respect to each of the positive electrode composite materials according to the respective Examples and the respective Comparative Examples obtained in the above [7-1], a lithium metal foil having a diameter of 8 mm (manufactured by Honjo Chemical Corporation) was bonded to both faces, whereby activated electrodes were formed. Then, an AC impedance was measured using an AC impedance analyzer Solartron 1260 (manufactured by Solartron Analytical, Inc.), and the lithium ion conductivity was determined. The measurement was performed at an AC amplitude of 10 mV in a frequency range from 10⁷ Hz to 10⁻¹ Hz. The lithium ion conductivity obtained by the measurement shows the total lithium ion conductivity including the bulk lithium ion conductivity and the grain boundary lithium ion conductivity in each fired body. It can be said that as this value is larger, the ion conductance is higher and the internal resistance is smaller.

### [7-3] Evaluation of Charge-Discharge Characteristics

With respect to each of the positive electrode composite materials according to the respective Examples and the respective Comparative Examples obtained in the above [7-1], sputtering was performed while introducing nitrogen gas using Li₃PO₄ manufactured by Kojundo Chemical Lab. Co., Ltd. as a target, whereby an electrolyte layer constituted by Li₃PO₄₋ₓNₓ in the form of a 4.2 µm thin film was formed at a surface of the positive electrode composite material.

Further, at a surface of this electrolyte layer, lithium metal was deposited to a thickness of 3.7 µm, and then, a copper foil was attached thereto as a current collector, whereby all solid-state batteries for evaluation were formed.

Each of these all solid-state batteries for evaluation was coupled to a battery charge-discharge evaluation system HJ1001SD8 manufactured by Hokuto Denko Corporation, and a relationship between the charge-discharge rate and the battery capacity at 25°C was analyzed, and then, the discharge capacity at 0.1C was determined. It can be said that as the value of the discharge capacity at 0.1C is larger, the charge-discharge characteristics are more excellent.

These results are collectively shown in Table 5. In Table 5, the composition of the solid electrolyte constituting each of the positive electrode composite materials obtained in the above [7-1] is also shown.

**Table 5**

| | Composition of solid electrolyte | Internal resistance | Charge-discharge characteristics |
|---|---|---|---|
| | | Ion conductivity [S/cm] | Discharge capacity at 0.1C [mAh/g] |
| Example 1 | Li_{6.3}La₃Zr_{1.3}Sb_{0.5}Ta_{0.2}O₁₂ | 7.6×10⁻⁴ | 136 |
| Example 2 | Li_{6.75}La₃Zr_{1.75}Nb_{0.25}O₁₂ | 2.5×10⁻⁴ | 136 |
| Example 3 | Li_{6.3}La₃Zr_{1.3}Sb_{0.5}Ta_{0.2}O₁₂ | 7.6×10⁻⁴ | 131 |
| Example 4 | Li_{6.3}La₃Zr_{1.3}Sb_{0.5}Ta_{0.2}O₁₂ | 6.9×10⁻⁴ | 109 |
| Example 5 | Li_{6.3}La₃Zr_{1.3}Sb_{0.5}Ta_{0.2}O₁₂ | 7.6×10⁻⁴ | 126 |
| Example 6 | Li_{6.3}La₃Zr_{1.3}Sb_{0.5}Ta_{0.2}O₁₂ | 7.6×10⁻⁴ | 129 |
| Example 7 | Li_{6.3}La₃Zr_{1.3}Sb_{0.5}Ta_{0.2}O₁₂ | 7.6×10⁻⁴ | 132 |
| Example 8 | Li_{6.3}La₃Zr_{1.3}Sb_{0.5}Ta_{0.2}O₁₂ | 7.6×10⁻⁴ | 132 |
| Example 9 | Li_{6.3}La₃Zr_{1.3}Sb_{0.5}Ta_{0.2}O₁₂ | 7.6×10⁻⁴ | 131 |
| Comparative Example 1 | - | - | 86 |
| Comparative Example 2 | Li_{6.3}La₃Zr_{1.3}Sb_{0.5}Ta_{0.2}O₁₂ | 7.6×10⁻⁴ | 43 |
| Comparative Example 3 | Li_{6.3}La₃Zr_{1.3}Sb_{0.5}Ta_{0.2}O₁₂ | 7.6×10⁻⁴ | 96 |

As apparent from Table 5, excellent results were obtained according to the present disclosure. On the other hand, satisfactory results could not be obtained in Comparative Examples.

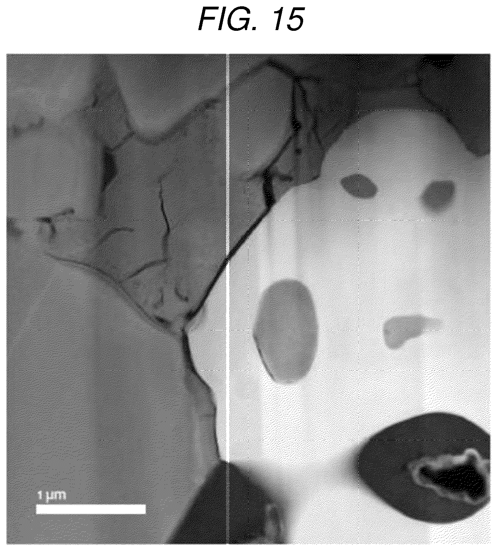

Further, when observation using a transmission electron microscope (a field emission scanning electron microscope ULTRA-55, manufactured by Carl Zeiss AG) was performed for each of the positive electrode composite materials of the respective Examples and the respective Comparative Examples obtained in the above [7-1], in the respective Examples, the interface between the positive electrode active material and the solid electrolyte had a structure in which these members are strongly adhered to each other, however, in the respective Comparative Examples, an interface at which these members are adhered to each other was hardly obtained, and it had a structure in which material segregation occurs. FIGS. 14 and 15 show transmission electron micrographs of the positive electrode composite materials that are fired bodies according to the above-mentioned Example 1 and Comparative Example 3.

## Claims

1. A positive electrode active material composite particle, comprising:
a base particle constituted by a positive electrode active material containing a lithium composite oxide having a layered crystal structure; and
a coating layer that is constituted by a material containing a multiple oxide different from the positive electrode active material, a lithium compound, and a metal salt containing an oxoanion, and that at least partially coats a surface of the base particle,
wherein the lithium compound and the metal salt containing an oxoanion can be the same compound, and
wherein the metal salt containing an oxoanion contains at least one of a nitrate ion and a sulfate ion as the oxoanion.

2. The positive electrode active material composite particle according to claim 1, wherein the multiple oxide different from the positive electrode active material contains La, Zr and M, M is one or more types of metal elements selected from Ta, Sb, and Nb, and a substance amount ratio of La, Zr, and M contained in the multiple oxide different from the positive electrode active material is 3:2-x:x, provided that 0 < x < 2.0.

3. The positive electrode active material composite particle according to claim 1, wherein a crystal phase of the multiple oxide different from the positive electrode active material is a pyrochlore-type crystal.

4. The positive electrode active material composite particle according to claim 1, wherein the base particle has an average particle diameter of 1.0 µm or more and 30 µm or less.

5. The positive electrode active material composite particle according to claim 1, wherein the coating layer has an average thickness of 0.002 µm or more and 3.0 µm or less.

6. The positive electrode active material composite particle according to claim 1, wherein the coating layer coats 10% or more area of a surface of the base particle.

7. The positive electrode active material composite particle according to claim 1, wherein the positive electrode active material is LiCoO₂.

8. A powder, comprising a plurality of the positive electrode active material composite particles according to claim 1.

## Patentansprüche

1. Positivelektrodenaktivmaterial-Verbundstoffpartikel, umfassend
ein Basispartikel, das durch ein Positivelektrodenaktivmaterial gebildet wird, das ein Lithium-Verbundstoffoxid mit einer geschichteten Kristallstruktur beinhaltet; und
eine Beschichtungsschicht, die durch ein Material gebildet wird, das ein Mehrfachoxid, das sich von dem Positivelektrodenaktivmaterial unterscheidet, eine Lithiumverbindung und ein Metallsalz, das ein Oxoanion enthält, enthält und die mindestens teilweise eine Oberfläche des Basispartikels beschichtet,
wobei die Lithiumverbindung und das Metallsalz, das ein Oxoanion enthält, dieselbe Verbindung sein können und
wobei das Metallsalz, das ein Oxoanion enthält, mindestens eines von einem Nitration und einem Sulfation als das Oxoanion enthält.

2. Positivelektrodenaktivmaterial-Verbundstoffpartikel nach Anspruch 1, wobei das Mehrfachoxid, das sich von dem Positivelektrodenaktivmaterial unterscheidet, La, Zr und M enthält, M eines oder mehrere Arten von Metallelementen ist, die ausgewählt sind aus Ta, Sb und Nb, und ein Substanzmengenverhältnis von La, Zr und M, die in dem Mehrfachoxid enthalten sind, das sich von dem Positivelektrodenaktivmaterial unterscheidet, 3:2-x:x ist, vorausgesetzt 0 < x < 2,0.

3. Positivelektrodenaktivmaterial-Verbundstoffpartikel nach Anspruch 1, wobei eine Kristallphase des Mehrfachoxids, das sich von dem Positivelektrodenaktivmaterial unterscheidet, ein Kristall vom Pyrochlortyp ist.

4. Positivelektrodenaktivmaterial-Verbundstoffpartikel nach Anspruch 1, wobei das Basispartikel einen durchschnittlichen Partikeldurchmesser von 1,0 µm oder mehr und 30 µm oder weniger aufweist.

5. Positivelektrodenaktivmaterial-Verbundstoffpartikel nach Anspruch 1, wobei die Beschichtungsschicht eine durchschnittliche Dicke von 0,002 µm oder mehr und 3,0 µm oder weniger aufweist.

6. Positivelektrodenaktivmaterial-Verbundstoffpartikel nach Anspruch 1, wobei die Beschichtungsschicht 10 % oder mehr einer Fläche einer Oberfläche des Basispartikels beschichtet.

7. Positivelektrodenaktivmaterial-Verbundstoffpartikel nach Anspruch 1, wobei das Positivelektrodenaktivmaterial LiCoO₂ ist.

8. Pulver, umfassend mehrere der Positivelektrodenaktivmaterial-Verbundstoffpartikel nach Anspruch 1.

## Revendications

1. Particule composite de matériau actif d'électrode positive, comprenant :
une particule de base constituée d'un matériau actif d'électrode positive contenant un oxyde composite de lithium présentant une structure cristalline en couches ; et
une couche de revêtement constituée d'un matériau contenant un oxyde multiple différent du matériau actif d'électrode positive, un composé de lithium, et un sel métallique contenant un oxoanion, et laquelle recouvre au moins partiellement une surface de la particule de base,
dans laquelle le composé de lithium et le sel métallique contenant un oxoanion peuvent être le même composé, et
le sel métallique contenant un oxoanion contient l'un au moins parmi un ion de nitrate et un ion de sulfate en tant qu'oxoanion.

2. Particule composite de matériau actif d'électrode positive selon la revendication 1, dans laquelle l'oxyde multiple différent du matériau actif d'électrode positive contient du La, du Zr et du M, M étant un ou plusieurs types d'éléments métalliques sélectionnées parmi le Ta, le Sb et le Nb, et un rapport de quantité de substance de La, Zr et M contenus dans l'oxyde multiple différent du matériau actif d'électrode positive est de 3:2-x:x, à condition que 0 < x < 2,0.

3. Particule composite de matériau actif d'électrode positive selon la revendication 1, dans laquelle une phase cristalline de l'oxyde multiple différent du matériau actif d'électrode positive est un cristal de type pyrochlore.

4. Particule composite de matériau actif d'électrode positive selon la revendication 1, dans laquelle la particule de base présente un diamètre de particule moyen de 1,0 µm ou plus et de 30 µm ou moins.

5. Particule composite de matériau actif d'électrode positive selon la revendication 1, dans laquelle la couche de revêtement présente une épaisseur moyenne de 0,002 µm ou plus et de 3,0 µm ou moins.

6. Particule composite de matériau actif d'électrode positive selon la revendication 1, dans laquelle la couche de revêtement recouvre 10 % ou plus d'une aire de surface de la particule de base.

7. Particule composite de matériau actif d'électrode positive selon la revendication 1, dans laquelle le matériau actif d'électrode positive est du LiCoO₂.

8. Poudre comprenant une pluralité de particules composites de matériau actif d'électrode positive selon la revendication 1.
